# EUROPEAN PATENT SPECIFICATION

(11) **EP 3 235 366 B1**
(45) Date of publication and mention of the grant of the patent: **30.01.2019**
(21) Application number: 17163869.5
(22) Date of filing: 30.03.2017
(51) Int. Cl.: A01F 15/07

(54) **APPARATUS AND METHOD FOR SUPPLYING A WEB OF WRAPPING MATERIAL TO A CHAMBER**
VORRICHTUNG UND VERFAHREN ZUR ZUFÜHRUNG EINER VERPACKUNGSMATERIALBAHN AN EINE KAMMER
APPAREIL ET PROCÉDÉ POUR FOURNIR UNE BANDE DE MATÉRIAU D'EMBALLAGE À UNE CHAMBRE

(30) Priority: 18.04.2016 NL 2016624
(43) Date of publication of application: 25.10.2017
(73) Proprietor: Forage Innovations B.V., 3147 PB Maassluis (NL)
(72) Inventor: VISSER, Arend Cornelis, 3147PB Maassluis (NL)
(74) Representative: AGCO Intellectual Property Department

(56) References cited:
- EP-A2- 2 769 616
- DE-A1- 3 617 155
- DE-A1-102004 023 701
- US-A- 5 036 642
- US-A1- 2009 272 072
- US-B2- 7 513 088

## Description

### FIELD OF THE INVENTION

The invention refers to an apparatus and to a method for supplying a web of wrapping material to a chamber, in particular to a drum-shaped bale forming chamber of an agricultural round baler. An object to be wrapped into the supplied web, e.g. a round-cylindrical bale, is contained in this chamber.

### BACKGROUND OF THE INVENTION

The invention can be used on board of a round baler. Such a round baler is moved over a field and forms under pressure from loose agricultural material a round-cylindrical bale in a drum-shaped bale forming chamber. The formed bale is ejected out of the bale forming chamber. In order to prevent the ejected bale from falling apart, the circumferential surface - or the entire surface - of the bale is wrapped while the bale is still in the bale forming chamber.

While being formed the bale in the bale forming chamber is rotated. For wrapping the bale surface it is necessary to convey a web of wrapping material from a reservoir outside of the bale forming chamber towards a wrapping material inlet such that the web can be injected through this wrapping material inlet into the bale forming chamber and can be taken by the rotated bale. Several proposals how to convey the web have been made.

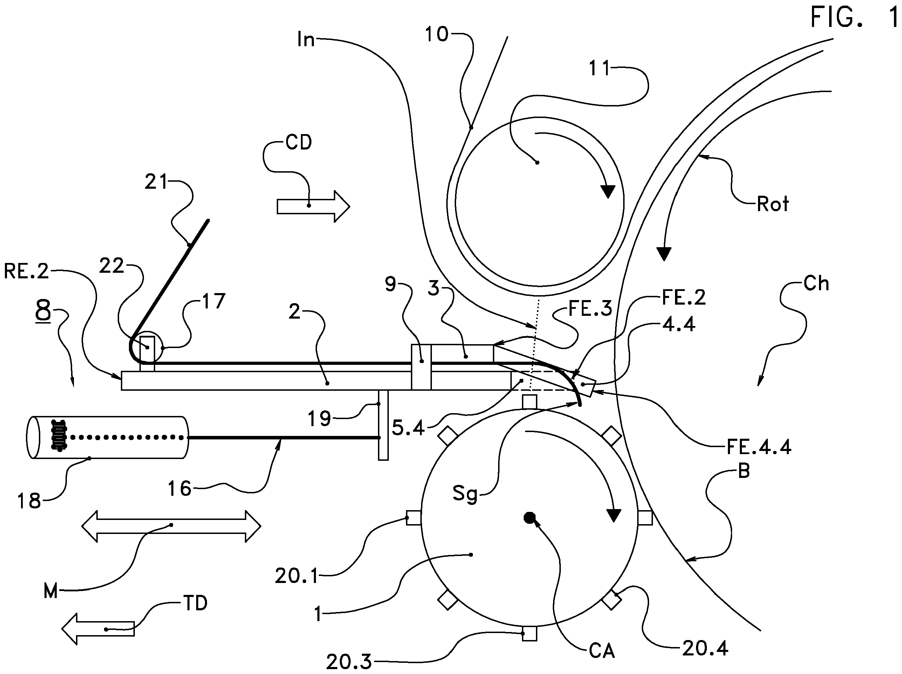

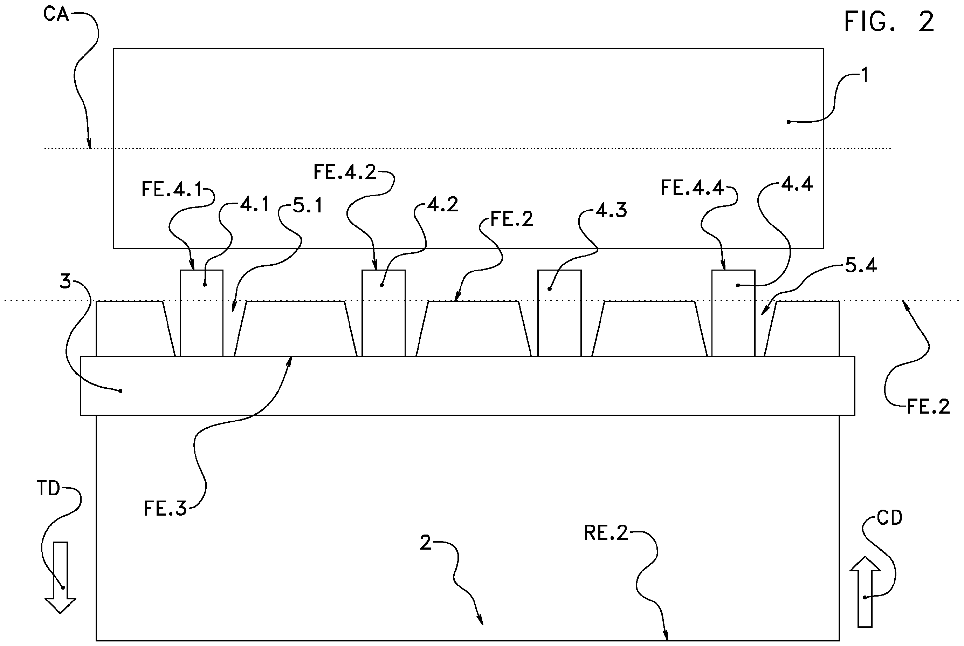

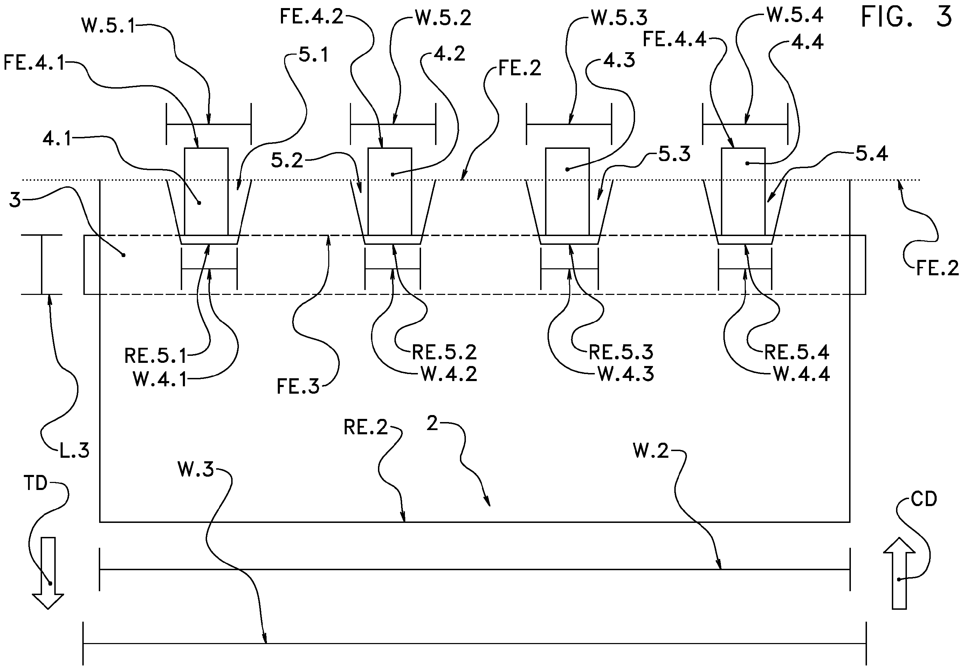

Fig. 1 of US 20090272072 A1 shows a round baler 10 with a bale chamber 16 and a web wrap device 18. The baler 10 forms a round bale in the bale chamber 16 and wraps the bale in the bale chamber 16 into a web 32 of plastic, net, paper, or similar material, cf. par. [0031]. The web 32 is pulled from a supply reel and is conveyed by means of a drive roll 36, cf. Fig. 2. A web carrier 40 can be moved between a rest position (Fig. 1) and a delivery position (Fig. 3). The web carrier 40 is guided by a parallelogram linkage 48 and is moved by an actuator 42, cf. Fig. 2.

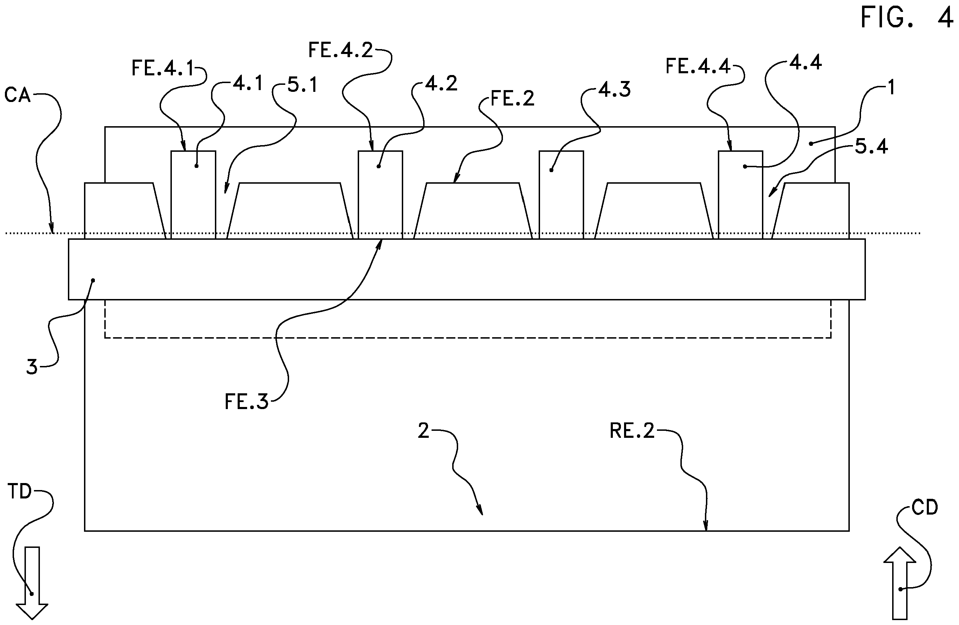

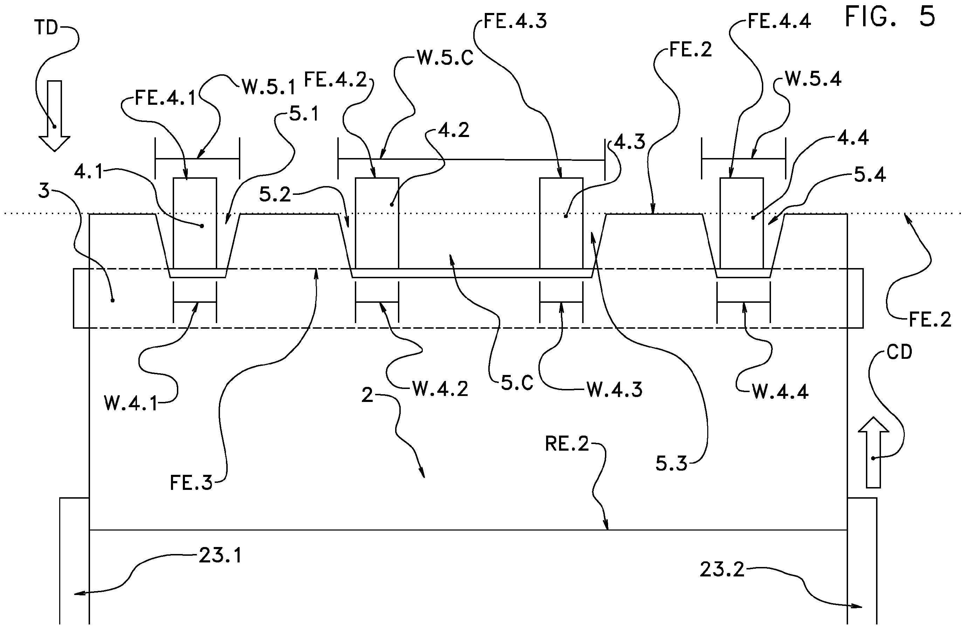

A stationary element 56 and a movable element 58 together clamp a front portion of the web 32, cf. Fig. 4 and Fig. 5 of the baler 10 of US 20090272072 A1. The moveable element 58 is positioned above the stationary element 56. The stationary element 56 forms a part of a circle, cf. Fig. 2 and Fig. 3. The stationary element 56 is curved in a vertical direction and comprises a leading edge 86 which is bent in a horizontal direction, cf. Fig. 5. The moveable element 58 can pivot to and away from the bale chamber 16 and moves towards the stationary element 56. The moveable element 58 is pivotally mounted at a bearing 52, cf. par. [0037]. Web 32 is located between the
moveable element 58 and the stationary element 56, cf. par. [0037].

The front area of the moveable element 58 of the baler 10 of US 20090272072 A1 has several slots 66 extending along the direction of web movement. Seven fingers 68 are formed, cf. Fig. 4, Fig. 5, and par. [0039]. In one embodiment the fingers 68 are bent downwardly with respect to the remaining part of the moveable element 58 so as to clamp the web 32. A corresponding set of ribs 70 and apertures 72 is provided in the stationary element 56. The comb-like front edge of the moveable element 58 may protrude through the set of ribs 70 and apertures 72 of the stationary element 56. Due to its weight the moveable element 58 moves towards the stationary element 56, cf. par. [0037]. The web 32 which is located between the elements 56 and 58 will securely be clamped and held while being pulled from the supply reel towards the bale chamber 16.

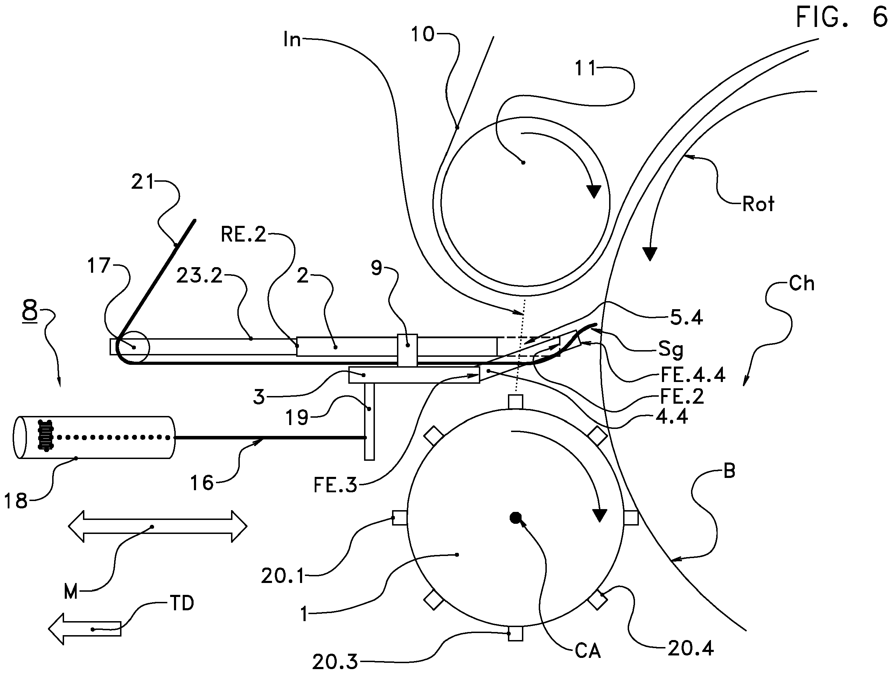

US 7513088 B2 discloses a round baler 10 which wraps a bale in the pressing chamber into wrapping material 30. A feed mechanism 18 pulls the wrapping material 30 from a supply reel 16 and conveys the wrapping material 30 towards a gap between the rollers 12 and 14, cf. Fig. 1 and Fig. 2. A duckbill 22 clamps the web between a fixed plate and the pivoted plate that is biased towards the fixed plate. Fig. 5 shows the improved duckbill 122 of the claimed invention. The sign 122 denotes the fixed plate and 122b the hinged plate below the fixed plate 122a. A baffle plate 124 is attached to the upper fixed plate 122a and projects beyond the fixed plate 122a and the hinged plate 122b, cf. Fig. 5. Fig. 6 shows a top view on the baffle 127. Fingers 124d are mounted at the front end of the baffle plate 124 and are flexible in the direction of the double arrow 128 of Fig. 5.

It may happen that a flap 50 of the web 30 is folded of the leading edge of the duckbill 122, cf. Fig. 7. The crop in the bale will wipe the top surface of the fingers 124b and the flap 50 will be peeled off the fingers 124b and will enter the bale, cf. Fig. 8 and col. 7 / I. 5 - 12 of US 7513088 B2.

Fig. 1 of US 9016032 B2 shows a round baler 10 with a bale chamber 16 and a web wrap apparatus 18 mounted at the front part. A supply reel 50 of wrapping material rests on a motion element 36 comprising a roller 52, cf. Fig. 2. The web 32 can be plastic, net, paper or the like, cf. col.3/I.50-51. The web 32 is injected through a gap 30 between the baling elements (pressing rollers) 24, cf. Fig. 3 and Fig. 7.

The web 32 is conveyed towards the bale chamber 16 of the baler 10 of US 9016032 B2 by means of a feeder 40 in the form of a duckbill. The feeder 40 comprises a strut 72 on each side holding between them a carrier 74 in the form of a mouthpiece at the lower end and two vertically distant bearings 76, cf. Fig. 3. A driver 78 is positioned between the carrier 74 in the form of a mouthpiece and the lower bearing 76. The carrier 74 comprises two opposite plates wherein one plate is biased onto the other. A piece of the web 32 is clamped between the two plates of the carrier 74. An upper link 82 and a lower link 84 form a part of a parallelogram linkage which guide the carrier 74 and the driver 78 of US 9016032 B2. An idler element 116 further assists and feeds the web in a proper way into the carrier 74. This idler element may be a bar or shaft.

Fig. 7 of US 9016032 B2 shows in a more detailed view the leading part of the feeder 40. The web sheet 32 is injected through a gap between two baling elements 24 into the baling chamber. A web sheet 132 is attached to the upper side of the feeder plate 128. The feeder plate 128 is made of sheet metal and the web sheet 132 of a flexible and elastic material, cf. col. 6/I.17ff. The feeder plate 128 together with the web sheet 132 rests on the carrier 74. The web 32 is clamped between them. A stripper 124 at the underside of the carrier 74 is formed as a thin and flat piece of plastic, rubber, sheet metal or wood and is fastened to the carrier 74, cf. Fig. 7 and Fig. 8. In addition a web sheet 126 is mounted at the bottom side of the carrier 74. The stripper 124 and the web sheet 126 extend in different directions, cf. Fig. 8.

In the embodiment of Fig. 11 to Fig. 13 of US 9016032 B2 a guard 134 is attached to the sidewalls 48 of the web wrap apparatus by means of a front lever 136 and a rear lever 138. The guard 134 is formed of sheet metal. This guard 134 prevents debris from building up on the feeder 40 and on the cutting edge 96.

Fig. 1 of US 5036642 shows a round baler 10 with a bale wrapping apparatus 64. A dispensing mechanism 66 of the bale wrapping apparatus 64 comprises a pair of levers 70 which are attached to a cross tube 72. Clamping members 80, 82 extend transversely of the baler 10 and are mounted at the levers 70. These clamping members 80, 82 dispense a wrapping material S such as net or plastic film from a supply reel R, cf. Fig. 3. The clamping members 80 and 82 of the dispensing mechanism 66 include an upper plate 126 and a lower plate 128, resp. The web of wrapping material S is fed between these plates 126 and 128. The upper plate 126 has a leading edge 126a. Several semicircular notches 127 are formed in this leading edge 126, cf. Fig. 5. The lower plate 128 has a leading edge 128a with a plurality of serrated teeth 129, cf. Fig. 6.
For conveying the web, the dispensing mechanism of the baler 10 of US 5036642 is moved from a retracted position (solid lines in Fig. 2) to a dispensing position (dotted lines). In the retracted position a tail T of the wrapping material S is gripped by the clamping members. In the dispensing position the tail T is inserted into the bale forming chamber. Wrapping material S is dispensed from the supply reel R. The notches 127 in the leading edge 126a of the upper plate 126 prevents an undesired back feeding of the sheet material and ensure proper dispensing of the sheet material S from the supply reel R into the bale forming chamber. The serrated teeth 120 in the leading edge 128a of the lower plate 128 allow the sheet material S to spread to its nominal width. This effect is achieved due to an outwardly slanted orientation of the serrated teeth 129, cf. Fig. 6.

Fig. 1 of US 5557906 shows a round baler 10 with a baling chamber 12 and a wrapping arrangement 14. The baler 10 forms a round bale 16 in the baling chamber 12 and wraps the bale in the baling chamber 12 into wrapping material 18. The wrapping material 18 may be plastic sheet or netting, fabric, paper or the like, cf. col. 2/I.29-32.

The wrapping arrangement 14 of the baler 10 of US 5557906 is mounted at the rear of the baler 12. Wrapped material 18 is conveyed along a feed path F towards a slot or gap between two adjacent rollers 20. The wrapped material 18 is pulled from a supply reel 31 and is conveyed by a pair of feed rolls 24 and a wrapped material guide assembly 28 which comprises a guide pan 29, cf. Fig. 1. The feed path F from the feed rollers 24 to the inlet extends above a planar rear section 23 of the guide pan 29 and along a curved forward section 33 of the guide pan 29. A cutter arrangement 26 comprises a knife 34 which is mounted on parallel arms 35 and severs the web.

The wrapped material guide assembly comprises a planar section 32 and a curved forward section 33. The planar section 32 is formed of a plate defining a planar guide surface. Edges 38 of the plate bend downward. In a rear region of the edges 38 an elongated hole 40 is cut. Several pins 42 project through the hole 40. Thereby the guide pan 29 can pivot, cf. the continuous and the dotted lines in Fig. 1. A spring 46 establishes a link between the cutter arrangement 26 and the guide pan 29. The continuous lines show the guide pan in the operative position and the dotted lines in the inoperative position.

Fig. 2 of US 5557906 shows a slightly modified guide pan 29'. The front of this guide pan 29' comprises serious of V-shaped or U-shaped notches 54 and 56, resp. Through these notches crop material or dirt can escape.

EP-A-2769616 discloses an apparatus according to the preamble of claim 1.

### SUMMARY OF THE INVENTION

A problem solved by the invention is to provide a wrapping material supplying apparatus with the features of the preamble of claim 1 and a wrapping material supplying method with the features of the preamble of claim 27 wherein the risk is reduced that the web is not properly injected into the chamber even if the web wraps around the conveying member or around the holding member.

This problem is solved by a wrapping material supplying apparatus with the features of claim 1 and by a wrapping material supplying method with the features of claim 27. Preferred embodiments are specified in the depending claims.

The wrapping material supplying apparatus according to the invention comprises
- a holding member with a front edge,
- a moveable conveying member with a front edge,
- at least one pressing element, and
- a conveying member drive.

The or every pressing element is mounted at the or adjacent to the front edge of the conveying member. At least one notch is cut into a front edge of the holding member and is positioned adjacent to the or one pressing element.

The supplying apparatus according to the invention is arranged for supplying a web of wrapping material to a chamber. An object to be wrapped is contained in the chamber. A wrapping material inlet guides into this chamber. The front edge of the holding member and the front edge of the conveying member and the or every pressing element mounted at the conveying member front edge point towards this wrapping material inlet.

The conveying member can be moved with respect to the wrapping material inlet between at least one remote position and an injecting position. The conveying member drive can move the conveying member into the injecting position.

The width of the or every pressing element at the front edge of the conveying member is smaller than the width of the notch adjacent to this pressing element. Therefore the pressing element can engage into the notch. The respective width of the or every notch is smaller than the respective width of the holding member. At least when the conveying member is in the injecting position, the or every pressing element engages into the or into one notch which is positioned adjacent to this pressing element.

A web of wrapping material can be positioned between the holding member with the notches and the conveying member and is kept between these members. At least if the conveying member is in the injecting position, a segment of the web kept between the members protrudes beyond at least one front edge. The or at least one pressing element can press the protruding segment of the web through the or one notch which is positioned adjacent to this pressing element. Thereby the protruding segment of the web is clamped between the holding member and the or at least one engaging pressing element.

The supplying apparatus according to the invention operates as follows and the supplying method comprises the following steps:
- The web is positioned between the conveying member and the holding member.
- The conveying member drive moves the conveying member with respect to the wrapping material inlet from the or one remote position in a conveying direction towards the wrapping material inlet. Thereby the drive moves the conveying member into the injecting position with respect to the wrapping material inlet. By being moved in the conveying direction, the conveying member is moved towards the object contained in the chamber such that the distance to the object is reduced.
- Thanks to the movement of the conveying member the web kept between the conveying member and the holding member is moved towards the wrapping material inlet. Thereby the web is moved towards the object contained in the chamber.
- At least when the conveying member reaches the injecting position, the web is clamped between the holding member on the one side and the or at least one pressing element mounted at the conveying member on the other side.
- The or at least one pressing element presses a part of the web positioned between the holding member and the conveying member through the notch positioned vertically adjacent to this pressing element, thereby improving the clamping effect.
- A front segment of the web protrudes beyond the front edge of the conveying member or beyond the front edge of the holding member or beyond both front edges towards the wrapping material inlet at least if the conveying member is in the injecting position.
- The moved web is injected through the wrapping material inlet into the chamber.

### ADVANTAGES

According to the invention the protruding segment of the web is clamped between the holding member on the one side and the or at least one pressing element at the front edge of the conveying member on the other side. The web is kept at least while being moved towards the wrapping material inlet and is clamped at least while the conveying member is in the injecting position. Thereby the risk of the undesired event is reduced that the web is moved away from the holding member or from the conveying member and cannot properly be moved towards the wrapping material inlet. This undesired event may in particular occur if the supplying apparatus is mounted on board of a vehicle which is moved over ground and which operates in a hilly environment with significant or changing inclination values or if the supplying apparatus is subjected to wind or rain or to vibrations.

According to the invention the or at least one pressing element engages through the or one adjacent notch. The or at least one pressing element adjacent to this notch presses the protruding segment of the web through the notch while the web is positioned between the holding member and the conveying member. This effect causes the protruding segment of the web to be wrinkled while the web is kept between the conveying member and the holding member. Wrinkling the web segment improves the clamping effect. It is possible but thanks to the pressing elements and the notches not necessary to clamp the web just by sandwiching the web between the holding member and the conveying member. Wrinkling the web provides a better clamping effect than just sandwiching it. The influence of different kinds of wrapping material and thereby different friction coefficients between the web and the members is reduced. The same supplying apparatus can subsequently be used for supplying different kinds of wrapping material.

The supplying apparatus can be used in combination with a wrapping material inlet which is delimited from one side by a driven injecting member adjacent to the chamber, in general by a roller or at least one belt guided around a roller wherein the roller or belt touches the object to be wrapped in the chamber. The roller rotating axis extends parallel to an inlet axis along which the wrapping material inlet extends. The or at least one pressing element presses the protruding web segment onto the circumferential surface of the injecting member, e.g. of the roller or onto the outer surface of at least one belt guided around the roller. The injecting member is at least temporarily driven and takes and conveys the web which is pressed by the or at least one pressing element against the injecting member. This desired effect contributes to injecting the web into the chamber.

Thanks to the invention it is possible to arrange the supplying apparatus as follows: At least when the conveying member is in the injecting position, the front edge of the or at least one pressing element projects beyond the roller rotating axis into the wrapping material inlet and therefore towards the chamber and towards an object to be wrapped in the chamber. Thereby the distance between
- the front edge of the pressing element and the object in the chamber is smaller than
- the distance between the roller rotating axis and the object
while the conveying member is in the injecting position and the roller touches the object. Thanks to this feature the or at least one pressing element presses the clamped front segment of the web against the surface of the injecting elements in an area which points towards the chamber and thereby towards the object in the chamber. This feature increases the reliability of the supplying apparatus as the risk is decreased that the web is not properly injected and placed on the object's surface.

According to the invention the web is not necessarily pressed over its entire width against the holding member and therefore against the injecting member. In contrast the web is pressed through the or at least one adjacent notch only in an area which is defined by the position of the notch and the width of the pressing element. This area is smaller than the width of the holding member and the width of the conveying member and in general smaller than the width of the web. Therefore the protruding web segment is punctually pressed and somehow wrinkled or folded. This feature reduces the risk that the web is not properly taken by the driven injecting member - even if the web has a wrapped around the holding member.

The supplying apparatus according to the invention can be used in combination with a web feeding roller adjacent to the wrapping material inlet. This web feeding roller or belt conveys the web towards the wrapping material inlet. The rotating axis of this web feeding roller is preferably parallel to the inlet axis. Preferably a distance between the object to be wrapped in the chamber and the web feeding roller occurs such that the circumferential velocity of the web feeding roller can differ from the circumferential velocity of the object to be wrapped and can be varied independently from the object. At least one longitudinal rib can be mounted on the roller surface. By the movement of the conveying member the web with the protruding segment being clamped between the or at least one pressing element and the holding member is moved to the web feeding roller when the conveying member is in the injecting position. The front edge of the or at least one pressing element projects beyond the rotating axis of the web feeding roller. Preferably the or at least one pressing element presses the protruding web segment against the circumferential surface of the web feeding roller. Afterwards the web feeding roller transports the web further towards the wrapping material inlet.

### PREFERED EMBODIMENTS

In one embodiment the conveying member extends in a conveying member plane. The holding member extends in a holding member plane. Preferably these two planes are parallel to each other. These parallel planes can be oriented horizontally, i.e. parallel to the ground, or can be oriented angularly or perpendicularly to the ground. Preferably the distance between these parallel planes can be changed. In one embodiment the minimal distance between the two planes is larger than the thickness of the web. In a further embodiment the web is clamped between the two members in a laminar manner.

In one embodiment the conveying member is positioned above the holding member. In this case the or at least one pressing element is positioned above the adjacent notch. A web of wrapping material is placed or kept on the holding member. The web is positioned above the holding member. The web is positioned below the conveying member and below the or every pressing element. The or at least one pressing element presses the protruding web segment downwards.

In an alternative embodiment the holding member is positioned above the conveying member. In this case the or at least one pressing element is positioned below the adjacent notch. The web is placed on the conveying member and is positioned above the or every pressing element and below the holding member. The or at least one pressing element presses the protruding web segment upwards.

In one embodiment only the force of gravity biases the conveying member and therefor the or every pressing element downwards towards the holding member. Or the force of gravity biases the holding member downwards towards the conveying member.

In a further embodiment the supplying apparatus comprises a biasing device. This biasing device biases the conveying member towards the holding member at least if the web is kept between the conveying member and the holding member. Or the biasing device biases the holding member towards the conveying member. In one implementation the web is not only clamped in the protruding front segment between the or at least one pressing element and the holding member but is further clamped between the conveying member and the holding member. These parts contact the web from two opposing sides.

In yet a further embodiment a distance between the conveying member and the holding member remains while the conveying member and the web are moved in the conveying direction. The protruding web segment is clamped by the or one pressing element and the holding member with the serrated front face. In one implementation the web rests on the holding member and the conveying member is positioned above the holding member and remains in a distance to the web. In a further implementation the web rests on the conveying member and the holding member is positioned above the conveying member and remains in a distance to the web. This embodiment reduces the risk that the web is damaged by being clamped in a large area.

In one embodiment a roller is positioned adjacent to the wrapping material inlet. This roller can rotate around a roller rotating axis. This roller rotating axis is parallel to an inlet axis along which the wrapping material inlet extends. The conveying member can be moved with respect to the roller between the or one remote position and the injecting position. In one embodiment the roller - or at least one belt deflected by this roller - touches the object to be wrapped in the chamber. The conveying member is moved very close to the wrapping material inlet and therefore very close to the roller or belt when being moved into the injecting position. The term "very close" means: The movement is performed such that the front edge of the or of at least one pressing element projects and protrudes beyond this roller rotating axis towards the object in the chamber when the conveying member is in the injecting position. The distance between this front edge and an object to be wrapped in the chamber is smaller than the distance between the object and the roller rotating axis. Thereby the clamped web is moved close to the object to be wrapped, namely - seen in the conveying direction - beyond the roller rotating axis. The rotated roller helps to inject the web into the chamber, e.g. by touching and moving the web or by guiding and deflecting at least one pressing belt which touches and moves the web. The distance between the front edge and the object, however, is larger than the distance between the roller rotating axis and the object when the conveying member is in the or one remote position. This embodiment further increases the reliability.

In one embodiment the conveying member drive moves the holding member together with the conveying member. Preferably the conveying member is not moved with respect to the holding member while the drive moves them in the conveying direction into the injecting position, i.e. the conveying member keeps its relative position with respect to the holding member during the movement. Preferably a mechanical coupling element couples the holding member with the conveying member. The coupling element transfers a movement of the conveying member into the injecting position onto the holding member such that the holding member is also moved towards the wrapping material inlet.

Preferably the or at least one pressing element engages through the or one adjacent notch and projects beyond that surface of the holding member which is opposite to the holding member surface pointing to the conveying member. This embodiment improves the achieved clamping effect.

In one embodiment the or every pressing element extends at least temporarily straight along a line which points towards the wrapping material inlet and is parallel to the plane in which the conveying member extends. As an alternative it is possible that at least one pressing element is mounted and permanently positioned angularly at the conveying member such that this pressing element engages into a notch. In a further embodiment at least one pressing element is bent or curved into the notch and towards the holding member. It is possible that the or at least one pressing element is resilient in itself and tends to be moved towards the holding member.

In one embodiment at least two pressing elements are mounted at the front edge of the conveying member. In one implementation at least two notches are cut into the holding member. One respective notch is adjacent to one pressing element. It is also possible that two pressing elements engage into the same notch. In one implementation at least one pressing element is curved towards the holding member. At least one further pressing element is in flush with the conveying member and parallel to the holding member.

The embodiment with the angularly mounted pressing element and that with the curved pressing element help to press the protruding web segment of the web through the or through one adjacent notch. The embodiment with several pressing elements in different angular positions with respect to the conveying member or improves the clamping effect.

In one embodiment every pressing element has the same width. In a further embodiment one pressing element has a greater width than a further pressing element. A pressing element can have a rectangular or trapezoidal shape. It is possible that several pressing elements with different shapes are mounted at the conveying member.

In one embodiment the or at least one pressing element is made of a resilient material, e.g. implemented as a spring steel or a spring made of plastic. Preferably the resilient pressing element is curved or bent towards the holding member. The resilient pressing element itself tends to bias the protruding web segment through the or one notch towards the holding member. Thanks to its resilient implementation the pressing element can temporarily touch the object in the chamber or an injecting member or web feeding member adjacent to the wrapping material inlet without the risk of a damage. This embodiment further reduces the risk that the web is not properly injected.

It is also possible that a front segment of a pressing element is made from a material different from the material of the rest of the pressing element. Therefore the front segment of the pressing element has a lower stiffness than the rest. It is possible that only the front segment is made of a resilient material. The implementation with a different material further reduces the risk that the object in the chamber is damaged by the or one pressing element.

In one embodiment the number of pressing elements is equal to the number of notches. In a further embodiment at least two pressing elements project through the same notch. The protruding web segment is further wrinkled when being pressed through the notch.

In one embodiment the movement of the conveying member from the or one remote position into the injecting position is a pure linear movement, e.g. in a horizontal or descending direction. In a further embodiment this movement is performed along a curved or arcuate trajectory.

The wrapping material can be a plastic film or a net, e.g.

The invention can be used on board of an agricultural vehicle which is moved over ground and which forms and wraps a bale in a bale forming chamber. The bale serves as the object to be wrapped in a chamber. The invention can also be used as a part of a stationary device.

The invention can also be used on a wrapping apparatus with a chamber wherein the object to be wrapped is formed outside of the chamber and is inserted or otherwise moved into the chamber.

In one embodiment the chamber has the form of a drum. The center axis of the drum extends parallel to the inlet axis. The object to be wrapped is round-cylindrical. Preferably the object in the chamber is rotated. In one implementation the axis around which the object in the chamber is rotated extends parallel to the inlet axis. The injected web is clamped between the rotated object and a wall of the chamber. This wall can be provided by a driven belt or a sequence of driven rollers and form the circumference of the chamber. Preferably the web is injected through the wrapping material inlet into a space between the object and a conveying member which belongs to a border of the chamber. The conveying member can comprise a roller or a conveyor belt. The web is clamped between the rotated object and the conveying member and is pulled.

These and other aspects of the invention and of the preferred embodiment will be even more apparent from the detailed embodiment as described below and will be elucidated in detail there.

### BRIEF DESCRIPTION OF THE DRAWINGS

Fig. 1 shows the wrapping material supplying apparatus according to a first embodiment of the invention with the conveying member positioned above the guiding plate (holding member) in a side view, i.e. in a viewing direction perpendicular to the travelling direction and parallel to the roller rotating axis;
Fig. 2 shows the wrapping material supplying apparatus of Fig. 1 in a top view, i.e. in a viewing direction perpendicular to the plane in which the guiding plate extends, with the conveying member being in the remote position;
Fig. 3 shows the wrapping material supplying apparatus from below, i.e. in a viewing direction opposite to that of Fig. 2;
Fig. 4 shows the wrapping material supplying apparatus in the top view of Fig. 2 with the conveying member being in the injecting position;
Fig. 5 shows a variation of the first embodiment of Fig. 1 to Fig. 4 in the viewing direction of Fig. 3 with a broad central notch 5.C;
Fig. 6 shows an alternative second embodiment with the guiding plate positioned above the conveying member.

### DETAILED DESCRIPTION OF EMBODIMENT

The following description refers to two alternative embodiments of the invention. In both embodiments the invention is used on board of a vehicle in the form of a round baler. A bale forming means of the baler comprises several driven pressing rollers and optionally at least one pressing belt. This bale forming means provides and partially surrounds a drum-shaped bale forming chamber. A casing comprising a stationary front housing and a pivotal discharge gate (tailgate) surrounds the bale forming means and thereby the provided bale forming chamber.

This round baler is moved over ground in a travelling direction TD by a tractor or further propelled vehicle. The round baler operates as follows:
- A pick-up unit picks up loose crop material (hay, straw, silage) from the ground.
- A conveying rotor with a sequence of rigid conveying tines conveys the picked-up loose material through a feeding channel in a direction opposite to the travelling direction towards the drum-shaped bale forming chamber.
- Optionally a cutting assembly cooperates with the conveying rotor and cuts the loose crop material while the material is conveyed through the feeding channel.
- The conveyed crop material is injected through a crop material inlet into the bale forming chamber.
- The bale forming means forms under pressure from the injected loose material a round-cylindrical bale and rotates the bale in the bale forming chamber. As further loose material is injected into the bale forming chamber, the rotated bale increases. The bale serves as the object contained in the chamber which is be wrapped.
- After the bale has reached a required diameter, the circumferential surface of the bale in the bale forming chamber is wrapped. While the bale surface is wrapped, no further crop material is injected into the bale forming chamber. In the embodiments a web of impermeable plastic sheet is used as the wrapping material. The invention can also be used for further kinds of wrapping material.
- A required number of layers of plastic film are placed around the bale's circumferential surface while the bale in the bale forming chamber is rotated.
- After the required layer number is placed around the circumferential surface of the bale, the web is severed at a severing position outside of the bale forming chamber.
- The tailgate is opened. The wrapped bale is ejected out of the bale forming chamber. The tailgate is closed again.
- The round baler can form a further bale in the bale forming chamber.

The web of plastic film is taken from a reservoir in the form of a supply reel. An unrolling station rotatably holds the supply reel. In both embodiments the unrolling station is mounted at the stationary front housing in a position above the crop material inlet. The invention can also be used when the reservoir is kept by an unrolling station mounted at the discharge gate.

For wrapping the bale surface, the web is conveyed towards a wrapping material inlet which guides into the bale forming chamber and is positioned above the crop material inlet. Preferably the web is deflected by a spreader roller such that the web keeps its width and the entire circumferential surface of the bale is wrapped. The web is injected through this wrapping material inlet into the bale forming chamber. The injected web is clamped between the rotated bale and the bale forming means. After the web is injected into the bale forming chamber and is clamped, the rotated bale and the bale forming means together pull the web and therefore further wrapping material from the supply reel such that the supply reel is rotated. Preferably the web is pulled with a higher velocity after the web has been injected into the bale forming chamber. Preferably the supply reel is decelerated by a brake such that the injected web is tensioned.

The wrapping material supplying apparatus according to the embodiments of the invention is mounted on board of the round baler and is positioned outside of the casing and is used for conveying the web towards the wrapping material inlet and for supporting the step of injecting the web into the bale forming chamber. In the described embodiments the wrapping material supplying apparatus and the unrolling station for the supply reel are mounted at the stationary front housing.

Fig. 1 to Fig. 4 show a first embodiment of the wrapping material supplying apparatus as well as a round-cylindrical bale B formed in the bale forming chamber Ch. Fig. 1 shows the supplying apparatus in a side view, Fig. 2 and Fig. 4 in a top view. Fig. 3 shows the supplying apparatus from below, i.e. in a viewing direction opposite to that of Fig. 2 and Fig. 4. The terms "side view" and "top view" refer to the travelling direction TD of the round baler which is from right to left in Fig. 1 and from top to bottom in Fig. 2 to Fig. 4. In Fig. 2 to Fig. 4 the web of wrapping material is omitted.

A driven pressing roller 1 rotates around its roller rotating axis (center axis) CA which is perpendicular to the drawing plane of Fig. 1 and is in the drawing planes of Fig. 2 to Fig. 4. The roller 1 touches the bale B in the bale forming chamber Ch. Preferably several longitudinal ribs are mounted on the shell of the pressing roller 1 and extend parallel to the roller rotating axis CA. In Fig. 3 the roller 1 is omitted for sake of clarity. The crop material inlet (not shown) is below the driven roller 1 and is preferably limited from above by the pressing roller 1.

At least one pressing belt 10 is guided around an idler deflecting roller 11 positioned above the driven roller 1 (only shown in Fig. 1). Fig. 1 further shows the respective rotating directions of the rollers 1 and 11. The pressing roller 1 and the or every pressing belt 10 touch the circumferential surface of a round-cylindrical bale B in the bale forming chamber Ch. In the situation shown in Fig. 1 this bale B has reached the required diameter and is to be wrapped. The or every pressing belt 10, the roller 1, and further rollers (not shown) rotate the round-cylindrical bale B in the direction Rot (in Fig. 1 anti-clockwise) while the bale B contained is in the drum-shaped bale forming chamber Ch.

A wrapping material inlet In is delimited from below by the pressing roller 1 and from above by a segment of the or every pressing belt 10 guided around the deflecting roller 11. The wrapping material inlet In extends along an inlet axis which is parallel to the roller rotating axis CA. A web 21 of wrapping material can be injected through this wrapping material inlet In into the bale forming chamber Ch.

The wrapping material supplying apparatus of the first embodiment (Fig. 1 to Fig. 4) comprises the following parts:
- a guiding plate 2 serving as the holding member and comprising a front edge FE.2,
- a conveying member 3 in the form of a traversal bar having a rectangular cross section and a front edge FE.3,
- a sequence of elongate rectangular pressing elements 4.1, 4.2, ... wherein the sequence extends perpendicular to the travelling direction TD and wherein every pressing element 4.1, 4.2, ... has a front edge FE.4.1, FE.4.2, FE.4.3,
- a sequence of trapezoidal notches 5.1, 5.2, ... which are cut into the guiding plate 2 wherein the notch sequence extends perpendicular to the travelling direction TD,
- a web deflecting roller 17,
- optionally a biasing device 9, and
- a drive 8 which moves the guiding plate 2 and the conveying member 3 and which serves as the conveying member drive.

The terms "front edge" and "rear edge" refer to the wrapping material inlet In, i.e. the front edge of a part is that edge which points to the wrapping material inlet In.

In both embodiments the guiding plate 2 extends in a guiding plate plane. The conveying member 3 extends in a conveying member plane. Both planes are parallel to each other, to the ground, to the roller rotating axis CA and to the inlet axis. The pressing elements 4.1, 4.2, ... are mounted at the front edge FE.3 of the conveying member 3. The front edges FE.4.1, FE.4.2 ... of the pressing elements 4.1, 4.2, ... protrude beyond the front edge FE.2 of the guiding plate 2.

In both embodiments the conveying member 3 and the guiding plate 2 can simultaneously be moved with respect to the wrapping material inlet between a remote position (Fig. 2) and an injecting position (Fig. 4). The drive 8 can move both members 2, 3 from the remote position in a conveying direction CD into the injecting position such that the distance between the members 2 and 3 and the wrapping material inlet In is reduced. The conveying direction CD is opposite to the travelling direction TD.

The web 21 is permanently positioned between the members 2, 3. A protruding segment Sg of the web 21 protrudes beyond both front edges FE.2, FE.3 of the members 2, 3.

According to the first embodiment the conveying member 3 and the pressing elements 4.1, 4.2, ... are positioned above the guiding plate 2. Every pressing element 4.1, 4.2, ... is positioned vertically above an adjacent notch 5.1, 5.2,... cut into the guiding plate 2 and engages into this adjacent notch 5.1, 5.2, ... Preferably every pressing element 4.1, 4.2, ... projects through the adjacent notch 5.1, 5.2, ... downwards beyond the lower surface of the guiding plate 2. Fig. 3 shows the width W.2 of the guiding plate 2, the length L.3 and the width W.3 of the conveying member 3, the front edge FE.2 of the guiding plate 2, the respective maximal width W.5.1, W.5.2, ... of the notches 5.1, 5.2, ..., and the respective width W.4.1, W.4.2, ... of the rectangular pressing elements 4.1, 4.2, ... The width is the dimension parallel to the inlet axis.

In one implementation every pressing element 4.1, 4.2, ... is rigidly connected with the conveying member 3. In an alternative embodiment at least one pressing element, preferably every pressing element 4.1, 4.2, ..., is rotatably mounted at the conveying member 3. It is possible that a biasing element or an actuator (not shown) can move the pressing elements 4.1, 4.2, ... with respect to the conveying member 3 towards the guiding plate 2.

In one implementation every pressing element 4.1, 4.2, 4.3 extends in a plane perpendicular to the drawing plane of Fig.1 and angular to the drawing planes of Fig. 2 to Fig. 4. In an alternative implementation at least one, preferably every pressing element 4.1, 4.2, ..., is arcuate or curved downwards, i.e. towards the guiding plate 2 and the pressing roller 1. It is possible that a curved pressing element 4.1, 4.2, ... projects through the adjacent notch 5.1, 5.2, ... below this pressing element 4.1, 4.2, ... The angular or curved pressing elements 4.1, 4.2, ... and the notches 5.1, 5.2, ... provide a combat-like clamp for the web 21.

It is also possible that at least one pressing element, e.g. every outer pressing elements 4.1 and 4.4, extends in a straight line parallel or angular to the guiding plate 2 and that at least one further pressing element, e.g. every central pressing element 4.2 and 4.3, is bent or curved towards the guiding plate 2. It is possible that the straight and the curved pressing elements alternate in the pressing element sequence.

Preferably a rubber layer covers one surface of every pressing element 4.1, 4.2, ... and serves as the contact surface. This rubber layer points towards the guiding plate 2 and contacts the web 21 such that a high friction force between the pressing elements 4.1, 4.2, ... and the web 21 occurs. In the first embodiment this rubber layer covers the lower surface of a pressing element 4.1, 4.2, ... It is possible that the lower surface of the conveying member 3 and/or the upper surface of the guiding plate 2 are also covered by a rubber surface.

The notches 5.1, 5.2, ... below the pressing elements 4.1, 4.2, ... are cut into the front edge FE.2 of the guiding plate 2. Therefore the guiding plate 2 has a serrated front face. In the embodiments shown in the figures every notch 5.1, 5.2, ... has the shape of a trapeze with the longest edge aligned the front edge FE.2 of the guiding plate 2, i.e. every notch 5.1, 5.2, ... tapers in a direction opposite to the conveying direction CD. Fig. 3 shows the respective width W.5.1, W.5.2, ... of the front edge of a notch 5.1, 5.2, ... The width of the rear edge RE.5.1, RE.5.2, ... of a notch 5.1, 5.2, ... is slightly larger than the width W.4.1, W.4.2, ... of the adjacent pressing element 4.1, 4.2 ...

According to the first embodiment the web deflecting roller 17 is mechanically connected at the guiding plate 2 by means of a mechanical link 22. In one implementation shown in Fig. 1 the guiding plate 2 extends over the entire length from the notches 5.1, 5.2,... to the deflecting roller 17, i.e. the rear edge RE.2 of the guiding plate 2 is below the deflecting roller 17. In this implementation the mounting position of the link 22 is near the rear edge RE.2 of the guiding plate 2. In a further implementation shown in Fig. 6 two rods 23.1, 23.2 are mounted at the rear edge RE.2 of the guiding plate 2 and extend from the rear edge RE.2 to the web deflecting roller 17, cf. Fig. 6. In the further implementation shown in Fig. 6 the roller 17 is rotatably mounted between the rods 23.1 and 23.2. In an alternative implementation the link 22 connects the deflecting roller 17 with these rods 23.1, 23.2.

In a preferred implementation of the first embodiment the biasing device 9 biases, e.g. presses or pulls, the conveying member 3 and thereby the pressing elements 4.1, 4.2, ... downwards and towards the guiding plate 2. In a further alternative implementation the biasing device 9 applies a constant biasing force onto the conveying member 3. In an alternative implementation the applied biasing force varies over time, e.g. in a controlled manner and depending on control inputs from a control unit on board of the baler or by the construction of the biasing device 9. In one implementation the biasing force depends on the position of the conveying member 3 with respect to the wrapping material inlet In and is larger when the conveying member 3 is in the remote position.

The biasing device 9 can comprise a pushing spring, a pulling spring, a pneumatic or hydraulic accumulator, and/or at least one piston-cylinder unit, e.g. At least if the pressing elements 4.1, 4.2, ... are rigidly mounted at the conveying member 3, the pressing elements 4.1, 4.2, ... are also biased downwards.

It is also possible that only the force of gravity biases the conveying member 3 against the guiding plate 2, i.e. no biasing device is provided. It is further possible that a distance between the conveying member 3 and the guiding plate 2 permanently occurs. This distance is larger than the width of the web 21. The web 21 is touched from above and kept on the guiding plate 2 only by the pressing elements 4.1, 4.2, ...but not by the conveying member 3.

In both embodiments the guiding plate 2 is moved together with the conveying member 3. According to the first and second embodiment the conveying member 3 and the guiding plate 2 can together be moved with respect to the wrapping material inlet In between the remote position and the injecting position. Fig. 1 and Fig. 6 show a double arrow M which indicates the possible movements. The distance between the wrapping material inlet In and the conveying member 3 being in the remote position is larger than the distance with the conveying member 3 being in the injecting position.

The pressing elements 4.1, 4.2, ... are moved together with the conveying member 3 between the remote position and the injecting position. When being moved from the remote position into the injecting position, the conveying member 3 with the pressing elements 4.1, 4.2, ... as well as the guiding plate 2 are moved in the conveying direction CD which is horizontal or sloping downwards and which is opposite to the travelling direction TD of the round baler. Fig. 2 shows the conveying member 3 and the pressing elements 4.1, 4.2, ... in the remote position and Fig. 4 in the injecting position. Fig. 1 shows an intermediate position close to the injecting position. The terms "length" and "width" denote a dimension parallel and perpendicular to this conveying direction CD, resp.

In one implementation (third embodiment, not shown) the guiding plate 2 is a stationary plate, i.e. is not movable with respect to the wrapping material inlet In. In a preferred implementation used in the first and second embodiments, however, the guiding plate 2 is also moveable from the remote position in the conveying direction CD into the injecting position. A mechanical coupling element associated with the biasing element 9 connects the guiding plate 2 with the conveying member 3. In the first embodiment the drive 8 is connected with the guiding plate 2 and moves the guiding plate 2 together with the conveying member 3 and the pressing elements 4.1, 4.2, ... Preferably two stationary guiding rails or further guiding members guide the guiding plate 2. Preferably the conveying member 3 is not moved with respect to the guiding plate 2 while the parts 2, 3, 4.1, 4.2, ... are moved in the conveying direction CD. The web deflecting roller 17 is moved together with the guiding plate 2 from the remote position to the injecting position.

In an implementation used in the first embodiment the drive 8 comprises a hydraulic or pneumatic piston-cylinder unit 18 with a piston 16 and a mechanical link 19. The link 19 connects the piston 16 with the guiding plate 2. In the embodiment the piston-cylinder unit 18 and the link 19 are positioned below the guiding plate 2 such that the guiding plate 2 protects the piston-cylinder unit 18 from debris and rain dropping from above.

In one implementation the piston-cylinder unit 18 is a double-acting actuator, i.e. can move the guiding plate 2 and thereby the conveying member 3 in both directions. A baler control unit (not shown) can regulate the flow of pressurized hydraulic or pneumatic fluid into the rod-side chamber as well as into the base-side chamber, e.g. by opening or closing a proportional valve.

In a further implementation a spring (not shown) can move the guiding plate 2 away from the wrapping material inlet In. The piston-cylinder unit 18 can move the guiding plate 2 against the biasing force of the spring in the conveying direction CD. The baler control unit can regulate the flow of hydraulic or pneumatic fluid into the base-side chamber (implementation of Fig. 1). The flow of fluid into the base-side chamber causes the piston 16 to move out of the cylinder, i.e. the piston-cylinder unit 18 expands. It is also possible that a fluid flow into the rod-side chamber causes the piston 16 to expand. It is also possible that the drive 8 comprises a shaft and a sprocket wheel wherein the sprocket wheel is mounted on the shaft and engages a serrated element at the lower surface of the guiding plate 2. The drive 8 can be implemented as a hydraulic or an electrical motor.

As can be seen in Fig. 1 the pressing elements 4.1, 4.2, ... engage entirely from above through the notches 5.1, 5.2, ... The front edges FE.4.1, FE.4.2, ... of the engaging pressing elements 4.1, 4.2, ... are situated below the notches 5.1, 5.2, ... After wrapping the previous bale and severing the web, a protruding segment Sg of the web 21 is formed. This protruding segment Sg of the web 21 resting on the guiding plate 2 is therefore pressed through the notches 5.1, 5.2, ... downwards. The protruding segment Sg of the web 21 is wrinkled and is therefore better clamped between the pressing elements 4.1, 4.2, ... and the guiding plate 2. In addition the web 21 is guided around the web deflecting roller 17.

In the first and second embodiments the web 21 of wrapping material is permanently clamped between the conveying member 3 and the pressing elements 4.1, 4.2, ... on the one side and the guiding plate 2 on the other side, in particular when the web 21 is moved, after the web 21 is injected into the chamber Ch, and after the web 21 is severed. The web 21 is permanently clamped and thereby kept between the guiding plate 2 and the conveying member 3. The biased conveying member 3 and/or the arcuate pressing elements 4.1, 4.2, ... press the web 21 from above onto the guiding plate 2 and prevent a significant movement of the web 21 with respect to the guiding plate 2 until the guiding plate 2 and the conveying member 3 reach the injecting position.

The moved web 21 is injected into the bale forming chamber Ch. After the rotated bale B and the bale forming means have clamped the injected web 21, the conveying member 3 and the guiding plate 2 are moved back into the remote position. The severing location for the web 21 is positioned between the wrapping material inlet In on the one side and the conveying member 3 and the guiding plate 2 on the other side. Severing the web 21 creates a new protruding segment Sg. Preferably the web 21 is severed when the conveying member 3 and the guiding plate 2 are in the remote position. The web deflecting roller 17 contributes to tension the injected web 21 to be severed.

In one implementation the biasing force applied onto the conveying member 3 decreases while the conveying member 3 is moved in the conveying direction CD. This implementation increases the reliability that the rotated bale B and the bale forming means 1, 10 together can grasp the injected web 21 and can pull it against the clamping force of the parts 2, 3, 4.1, 4.2, ....

While or after the previous bale is wrapped, the guiding plate 2 and the conveying member 3 are moved opposite to the conveying direction CD back into the remote position. While the current bale B increases in the bale forming chamber Ch, the guiding plate 2 and the conveying member 3 are kept in the remote position. Debris and dirt can drop through the space between the wrapping material inlet In and the members 2, 3 being in the remote position. The members 2, 3 clamp a leading portion of the web 21 between them without moving it. Preferably that part of the web 21 remains slack which extends from the supply reel - or from the web deflecting roller 17 - to the clamped leading portion. In one implementation this part remains slack until the web 21 is injected into the chamber Ch.

The event that the bale B in the bale forming chamber Ch reaches the required final diameter or a given smaller diameter threshold triggers the step that the wrapping procedure commences. Preferably a control unit mounted on board of the baler processes signals from a diameter sensor and triggers the drive 8. The triggered drive 8 moves the guiding plate 2 and the conveying member 3 in the conveying direction CD from the remote position (Fig. 2) via the intermediate position (Fig. 1) into the injecting position (Fig. 4). Thereby the clamped web 21 is conveyed in the conveying direction CD towards the wrapping material inlet In.

In the first embodiment every pressing element 4.1, 4.2, ... engages from above into the corresponding notch 5.1, 5.2, ... The respective width W.4.1, W.4.2, ... of a pressing element 4.1, 4.2, ... is smaller than the respective maximal width W.5.1, W.5.2, ... of the notch 5.1, 5.2, ... below this pressing element 4.1, 4.2, ... and preferably even smaller than the minimal notch width occurring at the rear edge RE.5.1, RE.5.2, ... of the notch 5.1, 5.2, .... Thereby the pressing elements 4.1, 4.2, ... can pass through the notches 5.1, 5.2, ... and press the protruding segment Sg of the web 21 from above through the notches 5.1, 5.2, ... towards the rotated roller 1. This features increases the clamping effect which is in particular of advantage in the case that the clamped web 21 has a quite high stiffness value, e.g. is a plastic film, even in the presence of rain or wind, and while the web 21 is moved in the conveying direction CD.

In the first embodiment the pressing elements 4.1, 4.2, ... permanently protrude from above beyond the guiding plate 2 towards the wrapping material inlet In. Seen in the conveying direction CD the entire conveying member 3 is permanently positioned behind the front edge FE.2 of the guiding plate 2, cf. in particular Fig. 3.

After the conveying member 3 and the guiding plate 2 together with the clamped web 21 have been moved into the injecting position, the pressing elements 4.1, 4.2, ... and in one implementation also the guiding plate 2 engage into the wrapping material inlet In. Only a small gap between the front edges FE.4.1, FE.4.2, ... of the pressing elements 4.1, 4.2, ... and the circumferential surface of the bale B occurs. As can be seen in the top view of Fig. 4 the following geometrical relationships occur according to the first embodiment when the conveying member 3 is in the injecting position:
- The pressing elements 4.1, 4.2, ... project and protrude beyond the roller rotating axis CA into the wrapping material inlet In, i.e. the common distance between the front edges FE.4.1, FE.4.2 ... of the pressing elements 4.1, 4.2, ... and the bale B is smaller than the distance between the roller rotating axis CA and the bale B.
- The rear edges RE.5.1, RE.5.2, ... of the notches 5.1, 5.2, ... are behind the roller rotating axis CA, i.e. the distance between the rear edges RE.5.1, RE.5.2 and the bale B is larger than the distance between the roller rotating axis CA and the bale B.
- In the first embodiment the front edge FE.2 of the guiding plate 2 also protrudes beyond the roller rotating axis CA into the wrapping material inlet In.

The pressing elements 4.1, 4.2, ... press the protruding segment Sg of the web 21 through the notches 4.1, 4.2, ... onto the circumferential surface of the roller 1. The rotated roller 1 moves a leading portion of the web 21 into the space between the bale B and the bale forming means.

In the first embodiment the number of notches 5.1, 5.2, ... is equal to the number of pressing elements 4.1, 4.2, ..., cf. Fig. 2 to Fig. 4. Fig. 5 shows a variation of the first embodiment in the viewing direction of Fig. 2. In place of two central notches 5.2, 5.3 one broader central notch 5.C is provided. This central notch 5.C has the maximal width W.5.C. Both pressing elements 4.2 and 4.3 above the central notch 5.C engage from above into and through this central notch 5.C.

In the first embodiment according to Fig. 1 to Fig. 4 as well as in the variation of Fig. 5 the guiding plate 2 is positioned below the conveying member 3. The pressing elements 4.1, 4.2, ... press the protruding segment Sg of the web 21 downwards through the notches 5.1, 5.2, ... Fig. 6 shows an alternative second embodiment in which the guiding plate 2 is positioned above the conveying member 3. Therefore the pressing elements 4.1, 4.2, ... engage from below into the notches 5.1, 5.2, ... Fig. 6 shows the conveying member 3 and the guiding plate 2 in the intermediate position of Fig. 1. The piston-cylinder unit 18 of the drive 8 is mechanically connected with the conveying member 3 below the guiding plate 2.

According to the shown implementation of the second embodiment the guiding plate 2 only extends over a part of the way from the front edge FE.2 to the deflecting roller 17. Two parallel rods 23.1, 23.2 connect the guiding plate 2 with the deflecting roller 17. These rods 23.1, 23.2 are shown in Fig. 5. The deflecting roller 17 is mounted at the rods 23.1, 23.2. A large gap occurs between the rods 23.1 and 23.2. This implementation with a shorter guiding plate 2 can also be used in the first embodiment.

This implementation of the second embodiment has the advantage that - thanks to its shorter length - less debris can be collected on the guiding plate 2 and can cause a jam or a further malfunction. Debris drops through the gap between the rods 23.1, 23.2. In addition the second embodiment more often yields the desired situation that the web 21 touches the bale B after the conveying member 3 is moved in the injecting position. The rotated bale B injects the web 21 in the space between the bale B and the roller 1.

In a third embodiment (not shown) the guiding plate 2 is stationary. The drive 8 only moves the conveying member 3 with the pressing elements 4,1. 4.2, ... Also in the third embodiment the conveying member 3 can be positioned above or below the guiding plate 2. Preferably a vertical distance between the guiding plate 2 and the conveying member 3 occurs. This distance is larger than the thickness of the web 21. Every or at least one pressing element 4.1, 4.2, ... touches the guiding plate 2 and presses the front portion of the web 21 against the guiding plate 2 while the conveying member 3 is in the remote position. The web 21 is moved with respect to the guiding plate 2 while the drive 8 moves the conveying member 3 with respect to the stationary guiding plate 2 in the conveying direction CD. The pressing elements 4.1, 4.2, ... shift the web 21 over the guiding plate 2. Shortly before the conveying member 3 reaches the injecting position, an increasing front portion of the web 21 protrudes beyond the front edge FE.2 of the stationary guiding plate 2. Thereby a protruding segment Sg is formed. The pressing elements 4.1, 4.2, ... press this protruding segment Sg of the web 21 through the stationary notches 5.1, 5.2, ...

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner.

**LIST OF REFERENCE SIGNS**

| | |
|---|---|
| 1 | driven pressing roller below the wrapping material inlet In, has longitudinal ribs 20.1, 20.2, ... on its circumference, can rotate around the roller axis CA, touches the bale B |
| 2 | rectangular guiding plate with the front edge FE.2 and the rear edge RE.2, has the width W.2, serves as the holding member |
| 3 | movable rectangular conveying member with the front edge FE.3, has the width W.3 and the length L.3 |
| 4.1, 4.2, ... | rectangular pressing elements mounted at the front edge FE.3 of the conveying member 3 |
| 5.1, 5.2, ... | trapezoidal notches cut in the guiding plate 2, have the maximal width W.5.1, W.5.2, ... and the rear edges RE.5.1, RE.5.2, ..., taper towards the rear edges RE.5.1, RE.5.2, ... |
| 5.C | broad trapezoidal central notch through which the pressing elements 4.2, 4.3 engage, has the maximal width W.5.C |
| 8 | drive for moving the guiding plate 2 and the conveying member 3 in the conveying direction CD, comprises the piston-cylinder unit 18 and the mechanical link 19, serves as the conveying member drive |
| 9 | biasing device for biasing the conveying member 3 against the guiding plate 2, positioned between the guiding plate 2 and the conveying member 3 |
| 10 | pressing belts guided around the deflecting roller 11, delimit the wrapping material inlet In from above |
| 11 | deflecting roller for the belts 10, positioned above the wrapping material inlet In |
| 16 | piston of the piston-cylinder unit 18, connected with the link 19 |
| 17 | deflecting roller for the web 21, connected with the guiding plate 2 by means of the link 22 |
| 18 | hydraulic or pneumatic piston-cylinder unit for moving the guiding plate 2 and the conveying member 3 at least in the conveying direction CD, belongs to the drive 8 |
| 19 | mechanical link between the piston-cylinder unit 18 and the guiding plate 2, belongs to the drive 8 |
| 20.1, 20.2, ... | longitudinal ribs on the Circumferential shell of the pressing roller 1 |
| 21 | web in the form of a plastic film, to be injected into the chamber Ch |
| 22 | mechanical link, mounts the deflecting roller 17 at the guiding plate 2 |
| 23.1, 23.2 | parallel rods, extends from the rear end RE.2 of the guiding plate 2 towards the web deflecting roller 17 |
| B | round-cylindrical bale in the bale forming chamber Ch, rotated in the direction Rot, serves as the object to be wrapped |
| CA | center axis and rotating axis of the pressing roller 1 |
| CD | conveying direction in which the guiding plate 2 and the conveying member 3 convey the web 21 from the remote position towards the wrapping material inlet In, opposite to the travelling direction TD |
| Ch | drum-shaped bale forming chamber in which the bale B is formed and wrapped |
| FE.2 | front edge of the guiding plate 2 |
| FE.3 | front edge of the conveying member 3 |
| FE.4.1, FE.4.2, ... | front edges of the pressing elements 4.1, 4.2, ... |
| In | wrapping material inlet between the pressing belts 10 and the roller 1 |
| L.3 | length of the conveying member 3 |
| M | possible movements of the members 2, 3 |
| RE.2 | rear edge of the guiding plate 2 |
| RE.5.1, RE.5.2 | rear edges of the notches 5.1, 5.2, ... which are cut into the guiding plate 2 |
| Rot | rotating direction of the bale B |
| Sg | protruding segment of the web 21 |
| TD | travelling direction of the round baler |
| W.2 | width of the guiding plate 2 |
| W.4.1, W.4.2, ... | uniform widths of the pressing elements 4.1, 4.2, ... |
| W.5.1, W.5.2, ... | maximal widths of the notches 5.1, 5.2, ..., occur at the front edge FE.2 of the guiding plate 2 |
| W.5.C | maximal width of the broad central notch 5.C |

## Claims

1. Apparatus for supplying a web (21) of wrapping material to a chamber (Ch),
wherein the chamber (Ch) is arranged to contain an object (B) which is to be wrapped into the supplied web (21),
wherein a wrapping material inlet (In) guides into the chamber (Ch),
wherein the wrapping material supplying apparatus comprises
- a holding member (2) with a front edge (FE.2) pointing towards the wrapping material inlet (In),
- a conveying member (3) with a front edge (FE.3) pointing towards the wrapping material inlet (In), and
- a conveying member drive (8),
wherein the conveying member (3) is moveable with respect to the wrapping material inlet (In) between
- at least one remote position and
- an injecting position,
wherein the drive (8) is arranged to move the conveying member (3)
- from the or one remote position
- in a conveying direction (CD)
- into the injecting position, and
wherein the wrapping material supplying apparatus is arranged
- to keep a web (21) of wrapping material in a position between the holding member (2) and the conveying member (3)
such that a segment (Sg) of the web (21) protrudes beyond at least one front edge (FE.2, FE.3) towards the wrapping material inlet (In) at least if the conveying member (3) is in the injecting position,
- to move the kept web (21) in the conveying direction (CD) towards the wrapping material inlet (In), and
- to inject the moved and protruding web (21) through the wrapping material inlet (In) into the chamber (Ch),
**characterized in that**
the wrapping material supplying apparatus further comprises at least one pressing element (4.1,4.2, ...) which
- is mounted at the front edge (FE.3) of the conveying member (3) and
- comprises a front edge (FE.4.1, FE.4.2, ...) pointing towards the wrapping material inlet (In),
wherein at least one notch (5.1, 5.2, ...)
- is cut into the front edge (FE.2) of the holding member (2) and
- is positioned adjacent to the or one pressing element (4.1, 4.2, ...),
wherein
- the respective maximal width (W.4.1, W.4.2, ...) of the or every pressing element (4.1,4.2, ...) is smaller than the respective minimal width (W.5.1, W.5.2, ...) of the or one notch (5.1, 5.2, ...) positioned adjacent to this pressing element (4.1, 4.2, ...) and
- the respective maximal width (W.5.1, W.5.2, ...) of the or every notch (5.1, 5.2, ...) is smaller than the width (W.2) of the front edge (FE.2) of the holding member (2),
wherein the width is the largest dimension in a direction perpendicular to the conveying direction (CD), and
wherein the or at least one pressing element (4.1,4.2, ...) engages into the notch (5.1, 5.2, ...) positioned adjacent to this pressing element (4.1, 4.2, ...) at least when the conveying member (3) is in the injecting position,
thereby
- pressing the protruding segment (Sg) of a web (21) being kept between the holding member (2) and the conveying member (3) through the adjacent notch (5.1, 5.2, ...) and
- clamping the protruding segment (Sg) of the web (21) at least between the holding member (2) and the or at least one pressing element (4.1, 4.2, ...).

2. Apparatus according to claim 1,
**characterized in that**
the wrapping material inlet (In) extends along an inlet axis and
a roller (1)
- is positioned adjacent to the wrapping material inlet (In) and
- is rotatable around a roller rotating axis (CA) which is parallel to the inlet axis,
wherein the front edge (FE.4.1, FE.4.2, ...) of the or at least one pressing element (4.1,4.2, ...) projects beyond the roller rotating axis (CA) into the wrapping material inlet (In) towards the chamber (Ch)
at least when the conveying member (3) is in the injecting position.

3. Apparatus according to one of the preceding claims,
**characterized in that**
the front edge (FE.4.1, FE.4.2, ...) of the or of at least one pressing element (4.1,4.2, ...) protrudes beyond the front edge (FE.2) of the holding member (2) towards the chamber (Ch)
at least when the conveying member (3) is in the injecting position.

4. Apparatus according to one of the preceding claims,
**characterized in that**
the or every notch (5.1, 5.2, ...) comprises a respective rear edge (RE.5.1, RE.5.2, ...) which points away from the wrapping material inlet (In),
wherein
- the distance between the respective rear edge (RE.5.1, RE.5.2, ...) of the or at least one notch (5.1, 5.2, ...) and the wrapping material inlet (In) is larger than
- the distance between the front edge (FE.3) of the conveying member (3) and the wrapping material inlet (In)
at least when the conveying member (3) is in the injecting position

5. Apparatus according to claim 4,
**characterized in that**
the wrapping material inlet (In) extends along an inlet axis and
a roller (1)
- is positioned adjacent to the wrapping material inlet (In) and
- is rotatable around a roller rotating axis (CA) which is parallel to the inlet axis,
wherein the conveying member (3) is moveable with respect to the roller (1) and wherein the distance between
- the rear edge (RE.5.1, RE.5.2, ...) of the notch (5.1, 5.2, ...) and
- the wrapping material inlet (In)
is larger than
- the distance between the roller rotating axis (CA) and
- the wrapping material inlet (In)
at least when the conveying member (3) is in the injecting position.

6. Apparatus according to one of the preceding claims,
**characterized in that**
seen in the conveying direction (CD) the or at least one pressing element (4.1, 4.2, ...) is angled or sloping with respect to the conveying member (3) towards the holding member (2).

7. Apparatus according to one of the preceding claims,
**characterized in that**
the or at least one pressing element (4.1, 4.2, ...) is curved towards the holding member (2).

8. Apparatus according to one of the preceding claims,
**characterized in that**
the width (W.3) of the conveying member (3) is larger than the length (L.3) of the conveying member (3),
wherein the length is the dimension in the conveying direction (CD).

9. Apparatus according to one of the preceding claims,
**characterized in that**
the or at least one pressing element (4.1,4.2, ...) comprises a contact surface which points towards the holding member (2),
wherein the contact surface is at least partially covered by a layer made of rubber and
wherein the rubber layer is arranged to contact a web (21) of wrapping material which is kept between the conveying member (3) and the holding member (2).

10. Apparatus according to one of the preceding claims,
**characterized in that**
the or at least one pressing element (4.1,4.2, ...) is rigidly mounted at the conveying member (3).

11. Apparatus according to one of the preceding claims,
**characterized in that**
the or at least one pressing element (4.1, 4.2, ...) is pivotal with respect to the conveying member (3),
wherein a biasing element tends to bias the or at least one pivotal pressing element (4.1, 4.2, ...) towards the holding member (2).

12. Apparatus according to one of the preceding claims,
**characterized in that**
the or at least one pressing element (4.1,4.2, ...) is made of a resilient material.

13. Apparatus according to one of the preceding claims,
**characterized in that**
at least two pressing elements (4.1,4.2, ...) are mounted at the front edge (FE.3) of the conveying member (3),
wherein the pressing elements (4.1,4.2, ...) are arranged in a pressing element sequence perpendicular to the conveying direction (CD) and
wherein every pressing element (4.1,4.2, ...) engages into the or one notch (5.1, 5.2, ...) positioned adjacent to this pressing element (4.1, 4.2, ...) at least when the conveying member (3) is in the injecting position,

14. Apparatus according to claim 13,
**characterized in that**
at least two notches (5.1, 5.2, ...) are cut into the front edge (FE.2) of the holding member (2),
wherein the notches (5.1, 5.2, ...) are arranged in a notch sequence perpendicular to the conveying direction (CD) and
wherein at least two of the pressing elements (4.1, 4.2, ...) are arranged to press a part of the web (21) through at least two adjacent notches (5.1, 5.2, ...).

15. Apparatus according to claim 13 or claim 14,
**characterized in that**
at least two pressing elements (4.2, 4.3) engage into the same adjacent notch (5.C)
which is cut into the front edge (FE.2) of the holding member (2),
wherein the sum of the maximal widths (W.4.2, W.4.3) of these pressing elements (4.2, 4.3) is smaller than the minimal width (W.5.C) of this adjacent notch (5.C).

16. Apparatus according to one of the preceding claims,
**characterized in that**
the conveying member drive (8) is arranged to move the holding member (2) together with the conveying member (3)
- from the or one remote position
- into the injecting position.

17. Apparatus according to claim 16,
**characterized in that**
the wrapping material supplying apparatus is arranged such that the holding member (2) keeps its position relative to the conveying member (3) while the conveying member drive (8) moves the holding member (2) and the conveying member (3) into the injecting position.

18. Apparatus according to claim 16 or claim 17,
**characterized in that**
the wrapping material supplying apparatus comprises a mechanical coupling element
which couples
- a movement of the conveying member (3) into the injecting position with
- a movement of the holding member (2) towards the wrapping material inlet (In).

19. Apparatus according to one of the preceding claims,
**characterized in that**
the wrapping material supplying apparatus comprises a deflecting member (17) which is mechanically connected
- with the holding member (2) and/or
- with the conveying member (3),
wherein the deflecting member (17) is moveable together with the conveying member (3) and/or the holding member (2) between
- the or one remote position and
- the injecting position and
wherein the deflecting member (17) is arranged to deflect a web (21) of wrapping material, and
wherein the web (21) comprises a segment being kept between
- the holding member (2) and
- the conveying member (3).

20. Apparatus according to one of the preceding claims,
**characterized in that**
the holding member (2) is stationary with respect to the wrapping material inlet (In) and
the conveying member drive (8) is arranged to move the conveying member (3) with respect to the holding member (2) into the injecting position.

21. Apparatus according to one of the preceding claims,
**characterized in that**
the supplying apparatus further comprises a biasing device (9) for biasing the conveying member (3) against the holding member (2).

22. Apparatus according to claim 21,
**characterized in that**
the biasing device (9) is arranged to apply a position-depending biasing force onto the conveying member (3),
wherein
- the biasing force applied onto the conveying member (3) being in the remote position is larger than
- the biasing force applied onto the conveying member (3) being in the injecting position.

23. Apparatus according to one of the preceding claims,
**characterized in that**
the conveying member (3) is mounted with a distance to the holding member (2), wherein the distance is larger than the thickness of a web (21) of wrapping material
kept between the conveying member (3) and the holding member (2).

24. Object wrapping apparatus comprising
- a chamber (Ch) arranged for containing an object (B) to be wrapped,
- a wrapping material inlet (In) guiding into the chamber (Ch), and
- a wrapping material supplying apparatus according to one of the preceding claims,
wherein the wrapping material supplying apparatus is arranged to inject a web (21) of wrapping material through the wrapping material inlet (In) into the chamber (Ch), and
wherein the object wrapping apparatus is arranged to wrap at least one surface of the object (B) into the injected web (21)
while the object (B) is contained in the chamber (Ch).

25. Object forming and wrapping apparatus comprising
- an object forming means providing a chamber (Ch) into which a wrapping material inlet (In) guides and
- an object wrapping apparatus according to claim 24,
wherein the object forming means is arranged to form an object (B) in the chamber (Ch) and
the object wrapping apparatus is arranged to wrap at least one surface of the formed object (B) into the injected web (21)
while the formed object (B) is contained in the chamber (Ch).

26. Vehicle adapted to be moved over ground and
comprising
- an object wrapping apparatus according to claim 24 or
- an object forming and wrapping apparatus according to claim 25.

27. Method for supplying a web (21) of wrapping material to a chamber (Ch),
wherein an object (B) which is to be wrapped into the supplied web (21) is contained in the chamber (Ch),
wherein a wrapping material inlet (In) guides into the chamber (Ch),
wherein the method is performed by using a wrapping material supplying apparatus comprising
- a holding member (2) with a front edge (FE.2) pointing towards the wrapping material inlet (In),
- a conveying member (3) with a front edge (FE.3) pointing towards the wrapping material inlet (In), and
- a conveying member drive (8),
wherein the conveying member (3) is moveable with respect to the wrapping material inlet (In) between
- at least one remote position and
- an injecting position,
wherein the method comprises the steps that
- the web (21) of wrapping material is positioned between the holding member (2) and the conveying member (3) and is kept between the members (2, 3)
such that a segment (Sg) of the web (21) protrudes beyond at least one front edge (FE.2, FE.3) towards the wrapping material inlet (In) at least if the conveying member (3) is in the injecting position,
- the conveying member drive (8) moves the conveying member (3) with respect to the wrapping material inlet (In) from the or one remote position in a conveying direction (CD) into the injecting position,
- by moving the conveying member (3) the kept web (21) is moved towards the wrapping material inlet (In), and
- the moved and protruding web (21) is injected through the wrapping material inlet (In) into the chamber (Ch),
**characterized in that**
the wrapping material supplying apparatus further comprises at least one pressing element (4.1,4.2, ...) which
- is mounted at the front edge (FE.3) of the conveying member (3) and
- comprises a front edge (FE.4.1, FE.4.2, ...) pointing towards the wrapping material inlet (In) and
at least one notch (5.1, 5.2, ...)
- is cut into the front edge (FE.2) of the holding member (2) and
- is positioned adjacent to the or one pressing element (4.1, 4.2, ...),
wherein the method comprises the further step that
the or at least one pressing element (4.1,4.2, ...) engages into the or one notch (5.1, 5.2, ...) which is positioned adjacent to this pressing element (4.1, 4.2, ...) at least when the conveying member (3) has reached the injecting position such that the protruding segment (Sg) of the web (21) is pressed by the or at least one pressing element (4.1, 4.2, ...) through the adjacent notch (5.1, 5.2, ...), thereby causing the protruding segment (Sg) of the web (21) to be clamped between the holding member (2) and the or at least one pressing element (4.1, 4.2, ...).

28. Method according to claim 27,
**characterized in that**
the wrapping material inlet (In) extends along an inlet axis and
a roller (1)
- is positioned adjacent to the wrapping material inlet (In) and
- is rotatable around a roller rotating axis (CA) which is parallel to the inlet axis,
wherein the step that the drive (8) moves the conveying member (3) into the injecting position causes the events that
- the conveying member (3) is moved with respect to the roller (1) and
- the front edge (FE.4.1, FE.4.2, ...) of the or at least one pressing element (4.1,4.2, ...) projects beyond the roller rotating axis (CA) into the wrapping material inlet (In) and towards the chamber (Ch)
at least when the conveying member (3) has reached the injecting position.

29. Method according to claim 27 or claim 28,
**characterized in that**
the supplying apparatus further comprises a biasing device (9),
wherein the step that the web (21) is kept between the holding member (2) and the conveying member (3) comprises the step that
the biasing device (9) biases the conveying member (3) towards the holding member (2)
such that the web (21) is at least temporarily sandwiched between the holding member (2) and the conveying member (3) and
wherein the step that the drive (8) moves the conveying member (3) comprises the step that
the biasing force which the biasing device (9) applies onto the conveying member (3) decreases while the conveying member (3) is moved in the conveying direction (CD).

30. Method for wrapping an object (B)
by using an object wrapping apparatus comprising a chamber (Ch) which contains the object (B) to be wrapped,
wherein a wrapping material inlet (In) guides into the chamber (Ch) and
wherein the method comprises the steps that
- a web (21) of wrapping material is supplied to the chamber (Ch) by applying a method according to one of the claims 27 to 29, and
- at least one surface of the object (B) in the chamber (Ch) is wrapped into the web (21) being injected into the chamber (Ch) while the object (B) is in the chamber (Ch).

31. Method for forming and wrapping an object (B)
by using an object forming means providing a chamber (Ch) into which a wrapping material inlet (In) guides,
wherein the method comprises the steps that
- the object forming means forms the object (B) in the provided chamber (Ch) and
- at least one surface of the object (B) in the chamber (Ch) is wrapped by using a method according to claim 30.

## Patentansprüche

1. Vorrichtung zum Bereitstellen einer Bahn (21) von Einwickelmaterial an eine Kammer (Ch),
wobei die Kammer (Ch) dazu angeordnet ist, ein Objekt (B) zu enthalten, das in die bereitgestellte Bahn (21) eingewickelt werden soll,
wobei ein Einwickelmaterialeinlass (In) in die Kammer (Ch) führt,
wobei die Einwickelmaterial-Bereitstellungsvorrichtung Folgendes aufweist:
- ein Tragbauteil (2) mit einer in Richtung auf den Einwickelmaterialeinlass (In) gerichteten Vorderkante (FE.2),
- ein Förderbauteil (3) mit einer in Richtung auf den Einwickelmaterialeinlass (In) gerichteten Vorderkante (FE.3), und
- einen Förderbauteilantrieb (8),
wobei das Förderbauteil (3) relativ zu dem Einwickelmaterialeinlass (In) zwischen
- mindestens einer Fernposition und
- einer Einführposition
beweglich ist,
wobei der Antrieb (8) dazu angeordnet ist, das Förderbauteil (3)
- von der oder einer Fernposition
- in einer Förderrichtung (CD)
- in die Einführposition
zu bewegen, und
wobei die Einwickelmaterial-Bereitstellungsvorrichtung dazu angeordnet ist,
- eine Bahn (21) von Einwickelmaterial in einer Position zwischen dem Tragbauteil (2) und dem Förderbauteil (3) zu halten,
sodass ein Segment (Sg) der Bahn (21) wenigstens dann, wenn sich das Förderbauteil (3) in der Einführposition befindet, über mindestens eine Vorderkante (FE.2, FE.3) in Richtung auf den Einwickelmaterialeinlass (In) übersteht,
- die gehaltene Bahn (21) in der Förderrichtung (CD) in Richtung auf den Einwickelmaterialeinlass (In) zu bewegen, und
- die bewegte und überstehende Bahn (21) durch den Einwickelmaterialeinlass (In) in die Kammer (Ch) einzuführen,
**dadurch gekennzeichnet, dass**
die Einwickelmaterial-Bereitstellungsvorrichtung weiterhin mindestens ein Presselement (4.1, 4.2, ...) aufweist, das
- an der Vorderkante (FE.3) des Förderbauteils (3) montiert ist und
- eine in Richtung auf den Einwickelmaterialeinlass (In) gerichtete Vorderkante (FE.4.1, FE.4.2, ...) aufweist,
wobei mindestens eine Kerbe (5.1, 5.2, ...)
- in die Vorderkante (FE.2) des Tragbauteils (2) geschnitten ist und
- benachbart dem oder einem Presselement (4.1, 4.2, ...) angeordnet ist,
wobei
- die jeweilige maximale Breite (W.4.1, W.4.2, ...) des oder jedes Presselements (4.1, 4.2, ...) kleiner ist als die jeweilige minimale Breite (W.5.1, W.5.2, ...) der oder einer Kerbe (5.1, 5.2, ...), die benachbart zu diesem Presselement (4.1, 4.2, ...) angeordnet ist, und
- die jeweilige maximale Breite (W.5.1, W.5.2, ...) der oder jeder Kerbe (5.1, 5.2, ...) kleiner ist als die Breite (W.2) der Vorderkante (FE.2) des Tragbauteils (2),
wobei die Breite die größte Dimension in einer Richtung senkrecht zu der Förderrichtung (CD) ist, und
wobei das oder mindestens ein Presselement (4.1, 4.2, ...) mindestens dann, wenn sich das Förderbauteil (3) in der Einführposition befindet, in die benachbart zu diesem Presselement (4.1, 4.2, ...) angeordnete Kerbe (5.1, 5.2,...) eingreift,
wodurch es
- das überstehende Segment (Sg) einer zwischen dem Tragbauteil (2) und dem Förderbauteil (3) gehaltenen Bahn (21) durch die benachbarte Kerbe (5.1, 5.2, ...) presst und
- das überstehende Segment (Sg) der Bahn (21) mindestens zwischen dem Tragbauteil (2) und dem oder mindestens einem Presselement (4.1, 4.2, ...) einklemmt.

2. Vorrichtung nach Anspruch 1, **dadurch gekennzeichnet, dass**
sich der Einwickelmaterialeinlass (In) entlang einer Einlassachse erstreckt und
eine Rolle (1)
- benachbart zu dem Einwickelmaterialeinlass (In) angeordnet ist und
- um eine zu der Einlassachse parallele Rollenrotationsachse (CA) rotierbar ist,
wobei sich die Vorderkante (FE.4.1, FE.4.2, ...) des oder mindestens eines Presselements (4.1, 4.2, ...) über die Rollenrotationsachse (CA) hinaus in den Einwickelmaterialeinlass (In) in Richtung auf die Kammer (Ch) erstreckt,
mindestens dann, wenn sich das Förderbauteil (3) in der Einführposition befindet.

3. Vorrichtung nach einem der vorhergehenden Ansprüche, **dadurch gekennzeichnet, dass** die Vorderkante (FE.4.1, FE.4.2, ...) des oder mindestens eines Presselements (4.1, 4.2, ...) über die Vorderkante (FE.2) des Tragbauteils (2) in Richtung auf die Kammer (Ch) übersteht, mindestens dann, wenn sich das Förderbauteil (3) in der Einführposition befindet.

4. Vorrichtung nach einem der vorhergehenden Ansprüche, **dadurch gekennzeichnet, dass** die oder jede Kerbe (5.1, 5.2, ...) eine jeweilige Hinterkante (RE.5.1, RE.5.2, ...) aufweist, die von dem Einwickelmaterialeinlass (In) weg gerichtet ist, wobei
- der Abstand zwischen der jeweiligen Hinterkante (RE.5.1, RE.5.2, ...) der oder mindestens einer Kerbe (5.1, 5.2, ...) und des Einwickelmaterialeinlasses (In) größer ist als
- der Abstand zwischen der Vorderkante (FE.3) des Förderbauteils (3) und des Einwickelmaterialeinlasses (In),
mindestens dann, wenn das Förderbauteil (3) sich in der Einführposition befindet.

5. Vorrichtung nach Anspruch 4, **dadurch gekennzeichnet, dass**
sich der Einwickelmaterialeinlass (In) entlang einer Einlassachse erstreckt und
eine Rolle (1)
- benachbart zu dem Einwickelmaterialeinlass (In) angeordnet ist und
- um eine zu der Einlassachse parallele Rollenrotationsachse (CA) rotierbar ist,
wobei das Förderbauteil (3) relativ zu der Rolle (1) beweglich ist und
wobei der Abstand zwischen
- der Hinterkante (RE.5.1, RE.5.2, ...) der Kerbe (5.1, 5.2, ...) und
- dem Einwickelmaterialeinlass (In)
größer ist als
- der Abstand zwischen der Rollenrotationsachse (CA) und
- dem Einwickelmaterialeinlass (In),
mindestens dann, wenn sich das Förderbauteil (3) in der Einführposition befindet.

6. Vorrichtung nach einem der vorhergehenden Ansprüche, **dadurch gekennzeichnet, dass** gesehen in der Förderrichtung (CD) das oder mindestens ein Presselement (4.1, 4.2, ...) relativ zu dem Förderbauteil (3) in Richtung auf das Tragbauteil (2) angewinkelt oder geneigt ist.

7. Vorrichtung nach einem der vorhergehenden Ansprüche, **dadurch gekennzeichnet, dass** das oder mindestens ein Presselement (4.1, 4.2, ...) in Richtung auf das Tragbauteil (2) gekrümmt ist.

8. Vorrichtung nach einem der vorhergehenden Ansprüche, **dadurch gekennzeichnet, dass** die Breite (W.3) des Förderbauteils (3) größer ist als die Länge (L.3) des Förderbauteils (3), wobei die Länge die Dimension in die Förderrichtung (CD) ist.

9. Vorrichtung nach einem der vorhergehenden Ansprüche, **dadurch gekennzeichnet, dass** das oder mindestens ein Presselement (4.1, 4.2, ...) eine Kontaktfläche aufweist, die in Richtung auf das Tragbauteil (2) gerichtet ist,
wobei die Kontaktfläche mindestens teilweise durch eine aus Gummi hergestellte Lage bedeckt ist und
wobei die Gummilage dazu angeordnet ist, eine Bahn (21) von Einwickelmaterial zu kontaktieren, die zwischen dem Förderbauteil (3) und dem Tragbauteil (2) gehalten wird.

10. Vorrichtung nach einem der vorhergehenden Ansprüche, **dadurch gekennzeichnet, dass** das oder mindestens ein Presselement (4.1, 4.2, ...) starr an dem Förderbauteil (3) montiert ist.

11. Vorrichtung nach einem der vorhergehenden Ansprüche, **dadurch gekennzeichnet, dass** das oder mindestens ein Presselement (4.1, 4.2, ...) relativ zu dem Förderbauteil (3) schwenkbar ist,
wobei ein Beaufschlagungselement danach strebt, das oder mindestens ein schwenkbares Presselement (4.1, 4.2, ...) in Richtung auf das Tragbauteil (2) zu beaufschlagen.

12. Vorrichtung nach einem der vorhergehenden Ansprüche, **dadurch gekennzeichnet, dass** das oder mindestens ein Presselement (4.1, 4.2, ...) aus einem elastischen Material hergestellt ist.

13. Vorrichtung nach einem der vorhergehenden Ansprüche, **dadurch gekennzeichnet, dass**
mindestens zwei Presselemente (4.1, 4.2, ...) an der Vorderkante (FE.3) des Förderbauteils (3) montiert sind,
wobei die Presselemente (4.1, 4.2, ...) in einer Presselementabfolge senkrecht zu der Förderrichtung (CD) angeordnet sind und
wobei jedes Presselement (4.1, 4.2, ...) in die oder eine benachbart zu diesem Presselement (4.1, 4.2, ...) angeordnete Kerbe (5.1, 5.2, ...) eingreift,
mindestens dann, wenn das Förderbauteil (3) sich in der Einführposition befindet.

14. Vorrichtung nach Anspruch 13, **dadurch gekennzeichnet, dass**
mindestens zwei Kerben (5.1, 5.2, ...) in die Vorderkante (FE.2) des Tragbauteils (2) geschnitten sind,
wobei die Kerben (5.1, 5.2, ...) in einer Kerbensequenz senkrecht zu der Förderrichtung (CD) angeordnet sind und
wobei mindestens zwei der Presselemente (4.1, 4.2, ...) dazu angeordnet sind, einen Teil der Bahn (21) durch mindestens zwei benachbarte Kerben (5.1, 5.2, ...) zu pressen.

15. Vorrichtung nach Anspruch 13 oder Anspruch 14, **dadurch gekennzeichnet, dass** mindestens zwei Presselemente (4.2, 4.3) in dieselbe benachbarte Kerbe (5.C) eingreifen,
die in die Vorderkante (FE.2) des Tragbauteils (2) geschnitten ist,
wobei die Summe der maximalen Breiten (W.4.2, W.4.3) dieser Presselemente (4.2, 4.3) kleiner ist als die minimale Breite (W.5.C) dieser benachbarten Kerbe (5.C).

16. Vorrichtung nach einem der vorhergehenden Ansprüche, **dadurch gekennzeichnet, dass** der Förderbauteilantrieb (8) dazu angeordnet ist, das Tragbauteil (2) zusammen mit dem Förderbauteil (3)
- von der oder einer Fernposition
- in die Einführposition
zu bewegen.

17. Vorrichtung nach Anspruch 16, **dadurch gekennzeichnet, dass** die Einwickelmaterial-Bereitstellungsvorrichtung so angeordnet ist, dass das Tragbauteil (2) seine Position relativ zu dem Förderbauteil (3) hält, während der Förderbauteilantrieb (8) das Tragbauteil (2) und das Förderbauteil (3) in die Einführposition bewegt.

18. Vorrichtung nach Anspruch 16 oder Anspruch 17, **dadurch gekennzeichnet, dass** die Einwickelmaterial-Bereitstellungsvorrichtung ein mechanisches Koppelelement aufweist,
das
- eine Bewegung des Förderbauteils (3) in die Einführposition mit
- einer Bewegung des Tragbauteils (2) in Richtung auf den Einwickelmaterialeinlass (In) koppelt.

19. Vorrichtung nach einem der vorhergehenden Ansprüche, **dadurch gekennzeichnet, dass** die Einwickelmaterial-Bereitstellungsvorrichtung ein Ablenkbauteil (17) aufweist,
das mechanisch
- mit dem Tragbauteil (2) und/oder
- mit dem Förderbauteil (3)
verbunden ist,
wobei das Ablenkbauteil (17) zusammen mit dem Förderbauteil (3) und/oder dem Tragbauteil (2) zwischen
- der oder einer Fernposition und
- der Einführposition
beweglich ist und
wobei das Ablenkbauteil (17) dazu angeordnet ist, eine Bahn (21) von Einwickelmaterial abzulenken, und
wobei die Bahn (21) ein Segment aufweist, das zwischen
- dem Tragbauteil (2) und
- dem Förderbauteil (3)
gehalten wird.

20. Vorrichtung nach einem der vorhergehenden Ansprüche, **dadurch gekennzeichnet, dass**
das Tragbauteil (2) relativ zu dem Einwickelmaterialeinlass (In) ortsfest ist und
der Förderbauteilantrieb (8) dazu angeordnet ist, das Förderbauteil (3) relativ zu dem Tragbauteil (2) in die Einführposition zu bewegen.

21. Vorrichtung nach einem der vorhergehenden Ansprüche, **dadurch gekennzeichnet, dass** die Bereitstellungsvorrichtung weiterhin eine Beaufschlagungseinrichtung (9) zum Beaufschlagen des Förderbauteils (3) gegen das Tragbauteil (2) aufweist.

22. Vorrichtung nach Anspruch 21, **dadurch gekennzeichnet, dass** die Beaufschlagungseinrichtung (9) dazu angeordnet ist, eine positionsabhängige Beaufschlagungskraft auf das Förderbauteil (3) auszuüben,
wobei
- die auf das sich in der Fernposition befindende Förderbauteil (3) ausgeübte Beaufschlagungskraft größer ist als
- die auf das sich in der Einführposition befindende Förderbauteil (3) ausgeübte Beaufschlagungskraft.

23. Vorrichtung nach einem der vorhergehenden Ansprüche, **dadurch gekennzeichnet, dass**
das Förderbauteil (3) mit einem Abstand zu dem Tragbauteil (2) montiert ist,
wobei der Abstand größer ist als die Dicke einer Bahn (21) von Einwickelmaterial,
die zwischen dem Förderbauteil (3) und dem Tragbauteil (2) gehalten wird.

24. Objekteinwickelvorrichtung mit
- einer Kammer (Ch), die dazu angeordnet ist, ein einzuwickelndes Objekt (B) zu enthalten,
- einem Einwickelmaterialeinlass (In), der in die Kammer (Ch) führt, und
- einer Einwickelmaterial-Bereitstellungsvorrichtung nach einem der vorhergehenden Ansprüche,
wobei die Einwickelmaterial-Bereitstellungsvorrichtung dazu angeordnet ist, eine Bahn (21) von Einwickelmaterial durch den Einwickelmaterialeinlass (In) in die Kammer (Ch) einzuführen, und wobei die Einwickelmaterial-Bereitstellungsvorrichtung dazu angeordnet ist, mindestens eine Oberfläche des Objekts (B) in die eingeführte Bahn (21) einzuwickeln,
während das Objekt (B) in der Kammer (Ch) enthalten ist.

25. Objektform- und -einwickelvorrichtung mit
- einem Objektformmittel, das eine Kammer (Ch) bereitstellt, in die ein Einwickelmaterialeinlass (In) führt, und
- einer Objekteinwickelvorrichtung nach Anspruch 24,
wobei das Objektformmittel dazu angeordnet ist, ein Objekt (B) in der Kammer (Ch) zu formen und
die Objekteinwickelvorrichtung dazu angeordnet ist, mindestens eine Oberfläche des geformten Objekts (B) in die eingeführte Bahn (21) einzuwickeln,
während das geformte Objekt (B) in der Kammer (Ch) enthalten ist.

26. Fahrzeug, das dazu angepasst ist, über den Boden bewegt zu werden und
Folgendes aufweist:
- eine Objekteinwickelvorrichtung nach Anspruch 24 oder
- eine Objektform- und -einwickelvorrichtung nach Anspruch 25.

27. Verfahren zum Bereitstellen einer Bahn (21) von Einwickelmaterial an eine Kammer (Ch), wobei ein in die bereitgestellte Ballen (21) einzuwickelndes Objekt (B) in der Kammer (Ch) enthalten ist,
wobei ein Einwickelmaterialeinlass (In) in die Kammer (Ch) führt,
wobei das Verfahren durchgeführt wird unter Verwendung einer Einwickelmaterial-Bereitstellungsvorrichtung mit:
- einem Tragbauteil (2) mit einer Vorderkante (FE.2), die in Richtung auf den Einwickelmaterialeinlass (In) zeigt,
- einem Förderbauteil (3) mit einer Vorderkante (FE.3), die in Richtung auf den Einwickelmaterialeinlass (In) zeigt, und
- einem Förderbauteilantrieb (8),
wobei das Förderbauteil (3) relativ zu dem Einwickelmaterialeinlass (In) zwischen
- mindestens einer Fernposition und
- einer Einführposition
beweglich ist,
wobei das Verfahren die folgenden Schritte aufweist:
- die Bahn (21) von Einwickelmaterial wird zwischen dem Tragbauteil (2) und dem Förderbauteil (3) angeordnet und wird zwischen den Bauteilen (2, 3) gehalten,
sodass ein Segment (Sg) der Bahn (21) mindestens dann, wenn sich das Förderbauteil (3) in der Einführposition befindet, über mindestens eine Vorderkante (FE.2, FE.3) in Richtung auf den Einwickelmaterialeinlass (In) übersteht,
- der Förderbauteilantrieb (8) bewegt das Förderbauteil (3) relativ zu dem Einwickelmaterialeinlass (In) von der oder einer Fernposition in einer Förderrichtung (CD) in die Einführposition,
- durch das Bewegen des Förderbauteils (3) wird die gehaltene Bahn (21) in Richtung auf den Einwickelmaterialeinlass (In) bewegt und
- die bewegte und überstehende Bahn (21) wird durch den Einwickelmaterialeinlass (In) in die Kammer (Ch) eingeführt,
**dadurch gekennzeichnet, dass**
die Einwickelmaterial-Bereitstellungsvorrichtung weiterhin mindestens ein Presselement (4.1, 4.2, ...) aufweist, das
- an der Vorderkante (FE.3) des Förderbauteils (3) montiert ist und
- eine Vorderkante (FE.4.1, FE.4.2, ...) aufweist, die in Richtung auf den Einwickelmaterialeinlass (In) zeigt, und
mindestens eine Kerbe (5.1, 5.2, ...)
- in die Vorderkante (FE.2) des Tragbauteils (2) geschnitten ist und
- benachbart zu dem oder einem Presselement (4.1, 4.2, ...) angeordnet ist,
wobei das Verfahren den weiteren Schritt aufweist, dass
das oder mindestens ein Presselement (4.1, 4.2, ...) mindestens dann, wenn das Förderbauteil (3) die Einführposition erreicht hat, in die oder eine Kerbe (5.1, 5.2, ...) eingreift, die benachbart zu diesem Presselement (4.1, 4.2, ...) angeordnet ist,
sodass das überstehende Segment (Sg) der Bahn (21) durch das oder mindestens ein Presselement (4.1, 4.2, ...) durch die benachbarte Kerbe (5.1, 5.2,...) gepresst wird,
wodurch es bewirkt, dass das überstehende Segment (Sg) der Bahn (21) zwischen dem Tragbauteil (2) und dem oder mindestens einem Presselement (4.1, 4.2, ...) eingeklemmt wird.

28. Verfahren nach Anspruch 27, **dadurch gekennzeichnet, dass**
sich der Einwickelmaterialeinlass (In) entlang einer Einlassachse erstreckt und
eine Rolle (1)
- benachbart zu dem Einwickelmaterialeinlass (In) angeordnet ist und
- um eine Rollenrotationsachse (CA) rotierbar ist, die parallel zu der Einlassachse ist,
wobei der Schritt, dass der Antrieb (8) das Förderbauteil (3) in die Einführposition bewegt, die folgenden Ereignisse auslöst:
- das Förderbauteil (3) wird relativ zu der Rolle (1) bewegt und
- die Vorderkante (FE.4.1, FE.4.2, ...) des oder mindestens eines Presselements (4.1, 4.2, ...) sich über die Rollenrotationsachse (CA) hinaus in den Einwickelmaterialeinlass (In) und in Richtung auf die Kammer (Ch) erstreckt,
mindestens dann, wenn das Förderbauteil (3) die Einführposition erreicht hat.

29. Verfahren nach Anspruch 27 oder Anspruch 28, **dadurch gekennzeichnet, dass** die Bereitstellungsvorrichtung weiterhin eine Beaufschlagungseinrichtung (9) aufweist,
wobei der Schritt, dass die Bahn (21) zwischen dem Tragbauteil (2) und dem Förderbauteil (3) gehalten wird, den Schritt aufweist, dass
die Beaufschlagungseinrichtung (9) das Förderbauteil (3) in Richtung auf das Tragbauteil (2) beaufsch lagt,
sodass die Bahn (21) mindestens zeitweise zwischen dem Tragbauteil (2) und dem Förderbauteil (3) eingeklemmt ist, und
wobei der Schritt, dass der Antrieb (8) das Förderbauteil (3) bewegt, den Schritt aufweist, dass die Beaufschlagungskraft, die die Beaufschlagungseinrichtung (9) auf das Förderbauteil (3) ausübt, abnimmt, während das Förderbauteil (3) in der Förderrichtung (CD) bewegt wird.

30. Verfahren zum Einwickeln eines Objekts (B)
unter Verwendung einer Objekteinwickelvorrichtung mit einer Kammer (Ch), die ein einzuwickelndes Objekt (B) aufweist,
wobei ein Einwickelmaterialeinlass (In) in die Kammer (Ch) führt, und
wobei das Verfahren die folgenden Schritte aufweist:
- ein Gewebe (21) von Einwickelmaterial wird der Kammer (Ch) durch Anwendung eines Verfahrens nach einem der Ansprüche 27 bis 29 bereitgestellt und
- mindestens eine Oberfläche des Objekts (B) wird in der Kammer (Ch) in die in die Kammer (Ch) eingeführte Bahn (21) eingewickelt, während sich das Objekt (B) in der Kammer (Ch) befindet.

31. Verfahren zum Formen und Einwickeln eines Objekts (B)
unter Verwendung eines Objektformmittels, das eine Kammer (Ch) bereitstellt, in die ein Einwickelmaterialeinlass (In) führt,
wobei das Verfahren die folgenden Schritte aufweist:
- das Objektformmittel formt in der bereitgestellten Kammer (Ch) das Objekt (B) und
- mindestens eine Oberfläche des Objekts (B) in der Kammer (Ch) wird unter Verwendung eines Verfahrens nach Anspruch 30 eingewickelt.

## Revendications

1. Dispositif destiné à fournir une bande (21) de matériau d'emballage à une chambre (Ch),
dans lequel la chambre (Ch) est agencée afin de contenir un objet (B) qui est destiné à être emballé dans la bande (21) fournie,
dans lequel une entrée de matériau d'emballage (In) assure le guidage dans la chambre (Ch),
dans lequel le dispositif d'alimentation en matériau d'emballage comprend
un élément de retenue (2) avec un bord avant (FE.2) orienté vers l'entrée de matériau d'emballage (In),
un élément de transfert (3) avec un bord avant (FE.3) orienté vers l'entrée de matériau d'emballage (In), et
un dispositif d'entraînement d'élément de transfert (8),
dans lequel l'élément de transfert (3) peut être déplacé par rapport à l'entrée de matériau d'emballage (In) entre
au moins une position distante et
une position d'injection,
dans lequel le dispositif d'entraînement (8) est agencé afin de déplacer l'élément de transfert (3)
à partir de la ou d'une position distante
suivant une direction de transfert (CD)
vers la position d'injection, et
dans lequel le dispositif d'alimentation en matériau d'emballage est agencé de manière à
maintenir une bande (21) de matériau d'emballage dans une position entre l'élément de retenue (2) et l'élément de transfert (3)
de telle sorte qu'un segment (Sg) de la bande (21) s'étend au moins au delà d'un bord avant (FE.2, FE.3) vers l'entrée de matériau d'emballage (In) au moins si l'élément de transfert (3) est dans la position d'injection,
déplacer la bande maintenue (21) suivant la direction de transfert (CD) vers l'entrée de matériau d'emballage (In), et
injecter la bande déplacée et en saillie (21) à travers l'entrée de matériau d'emballage (In) dans la chambre (Ch),
**caractérisé en ce que**
le dispositif d'alimentation en matériau d'emballage comprend, en outre, au moins un élément de pression (4.1, 4.2, ...) qui
est monté au niveau du bord avant (FE.3) de l'élément de transfert (3) et
comprend un bord avant (FE.4.1, FE.4.2, ...) orienté vers l'entrée de matériau d'emballage (In),
dans lequel au moins une encoche (5.1, 5.2, ...)
est découpée sur le bord avant (FE.2) de l'élément de retenue (2) et
est positionnée de manière adjacente à l'élément de pression (4.1, 4.2, ...) ou à l'un de ceux-ci,
dans lequel
la largeur maximale respective (W.4.1, W.4.2, ...) de l'élément de pression (4.1, 4.2, ...) ou de chacun de ceux-ci est inférieure à la largeur minimale respective (W.5.1, W.5.2, ...) de l'encoche (5.1, 5.2, ...) ou de l'une de celles-ci positionnée de manière adjacente à cet élément de pression (4.1, 4.2, ...) et
la largeur maximale respective (W.5.1, W.5.2, ...) de l'encoche (5.1, 5.2, ...) ou de chacune de celles-ci est inférieure à la largeur (W.2) du bord avant (FE.2) de l'élément de retenue (2),
dans lequel la largeur est la dimension la plus grande dans une direction perpendiculaire à la direction de transfert (CD), et
dans lequel l'élément de pression (4.1, 4.2, ...) ou au moins l'un de ceux-ci s'assemble dans l'encoche (5.1, 5.2, ...) positionnée de manière adjacente à cet élément de pression (4.1, 4.2, ...) au moins lorsque l'élément de transfert (3) est dans la position d'injection,
de telle sorte qu'il
presse le segment en saillie (Sg) d'une bande (21) qui est maintenue entre l'élément de retenue (2) et l'élément de transfert (3) à travers l'encoche (5.1, 5.2, ...) adjacente et
bloque le segment en saillie (Sg) de la bande (21) au moins entre l'élément de retenue (2) et l'élément de pression (4.1, 4.2, ...) ou au moins l'un de ceux-ci.

2. Dispositif selon la revendication 1,
**caractérisé en ce que**
l'entrée de matériau d'emballage (In) s'étend le long d'un axe d'entrée et
un rouleau (1)
est positionné de manière adjacente à l'entrée de matériau d'emballage (In) et
peut tourner autour d'un axe de rotation de rouleau (CA) qui est parallèle à l'axe d'entrée,
dans lequel le bord avant (FE.4.1, FE.4.2, ...) de l'élément de pression (4.1, 4.2, ...) ou du au moins un de ceux-ci s'étend au delà de l'axe de rotation de rouleau (CA) dans l'entrée de matériau d'emballage (In) vers la chambre (Ch)
au moins lorsque l'élément de transfert (3) est dans la position d'injection.

3. Dispositif selon l'une des revendications précédentes,
**caractérisé en ce que**
le bord avant (FE.4.1, FE.4.2, ...) de l'élément de pression (4.1, 4.2, ...) ou du au moins un de ceux-ci s'étend au delà du bord avant (FE.2) de l'élément de retenue (2) vers la chambre (Ch)
au moins lorsque l'élément de transfert (3) est dans la position d'injection.

4. Dispositif selon l'une des revendications précédentes,
**caractérisé en ce que**
l'encoche (5.1, 5.2, ...) ou chacune de celles-ci comprend un bord arrière (RE.5.1, RE.5.2, ...) respectif qui est orienté à l'écart de l'entrée de matériau d'emballage (In),
dans lequel
la distance entre le bord arrière (RE.5.1, RE.5.2, ...) respectif de l'encoche (5.1, 5.2, ...) ou au moins une de celles-ci et l'entrée de matériau d'emballage (In) est supérieure à
la distance entre le bord avant (FE.3) de l'élément de transfert (3) et l'entrée de matériau d'emballage (In)
au moins lorsque l'élément de transfert (3) est dans la position d'injection.

5. Dispositif selon la revendication 4,
**caractérisé en ce que**
l'entrée de matériau d'emballage (In) s'étend le long d'un axe d'entrée et
un rouleau (1)
est positionné de manière adjacente à l'entrée de matériau d'emballage (In) et
peut tourner autour d'un axe de rotation de rouleau (CA) qui est parallèle à l'axe d'entrée,
dans lequel l'élément de transfert (3) peut être déplacé par rapport au rouleau (1) et
dans lequel la distance entre
le bord arrière (RE.5.1, RE.5.2, ...) de l'encoche (5.1, 5.2, ...) et
l'entrée de matériau d'emballage (In) est supérieure à
la distance entre l'axe de rotation de rouleau (CA) et
l'entrée de matériau d'emballage (In) au moins lorsque l'élément de transfert (3) est dans la position d'injection.

6. Dispositif selon l'une des revendications précédentes,
**caractérisé en ce que**
vu suivant la direction de transfert (CD) l'élément de pression (4.1, 4.2, ...) ou au moins l'un de ceux-ci forme un angle ou est incliné par rapport à l'élément de transfert (3) vers l'élément de retenue (2).

7. Dispositif selon l'une des revendications précédentes,
**caractérisé en ce que**
l'élément de pression (4.1, 4.2, ...) ou au moins l'un de ceux-ci est courbé vers l'élément de retenue (2).

8. Dispositif selon l'une des revendications précédentes,
**caractérisé en ce que**
la largeur (W.3) de l'élément de transfert (3) est supérieure à la longueur (L.3) de l'élément de transfert (3),
dans lequel la longueur est la dimension dans la direction de transfert (CD).

9. Dispositif selon l'une des revendications précédentes,
**caractérisé en ce que**
l'élément de pression (4.1, 4.2, ...) ou au moins l'un de ceux-ci comprend une surface de contact qui est orientée vers l'élément de retenue (2),
dans lequel la surface de contact est au moins partiellement recouverte par une couche à base de caoutchouc
et
dans lequel la couche de caoutchouc est agencée de manière à entrer en contact avec une bande (21) de matériau d'emballage qui est maintenue entre l'élément de transfert (3) et l'élément de retenue (2).

10. Dispositif selon l'une des revendications précédentes,
**caractérisé en ce que**
l'élément de pression (4.1, 4.2, ...) ou au moins l'un de ceux-ci est monté de manière rigide au niveau de l'élément de transfert (3).

11. Dispositif selon l'une des revendications précédentes,
**caractérisé en ce que**
l'élément de pression (4.1, 4.2, ...) ou au moins l'un de ceux-ci peut pivoter par rapport à l'élément de transfert (3),
dans lequel un élément d'application tend à appliquer l'élément de pression (4.1, 4.2, ...) pouvant pivoter ou au moins l'un de ceux-ci vers l'élément de retenue (2).

12. Dispositif selon l'une des revendications précédentes,
**caractérisé en ce que**
l'élément de pression (4.1, 4.2, ...) ou au moins l'un de ceux-ci est à base d'un matériau élastique.

13. Dispositif selon l'une des revendications précédentes,
**caractérisé en ce que**
au moins deux éléments de pression (4.1, 4.2, ...) sont montés au niveau du bord avant (FE.3) de l'élément de transfert (3),
dans lequel les éléments de pression (4.1, 4.2, ...) sont agencés suivant une série d'éléments de pression perpendiculaires à la direction de transfert (CD) et
dans lequel chaque élément de pression (4.1, 4.2, ...) s'assemble dans l'encoche (5.1, 5.2, ...) ou l'une de celles-ci positionnée de manière adjacente à cet élément de pression (4.1, 4.2, ...)
au moins lorsque l'élément de transfert (3) est dans la position d'injection,

14. Dispositif selon la revendication 13,
**caractérisé en ce que**
au moins deux encoches (5.1, 5.2, ...) sont découpées sur le bord avant (FE.2) de l'élément de retenue (2),
dans lequel les encoches (5.1, 5.2, ...) sont agencées suivant une série d'encoches perpendiculaires à la direction de transfert (CD) et
dans lequel au moins deux des éléments de pression (4.1, 4.2, ...) sont agencés afin de presser une partie de la bande (21) à travers au moins deux encoches (5.1, 5.2, ...) adjacentes.

15. Dispositif selon la revendication 13 ou 14,
**caractérisé en ce que**
au moins deux éléments de pression (4.2, 4.3) s'assemblent dans la même encoche (5.C) adjacente
qui est découpé sur le bord avant (FE.2) de l'élément de retenue (2),
dans lequel la somme des largeurs maximales (W.4.2, W.4.3) de ces éléments de pression (4.2, 4.3) est inférieure à la largeur minimale (W.5.C) de cette encoche (5.C) adjacente.

16. Dispositif selon l'une des revendications précédentes,
**caractérisé en ce que**
le dispositif d'entraînement d'élément de transfert (8) est agencé afin de déplacer l'élément de retenue (2) ensemble avec l'élément de transfert (3)
à partir de la ou d'une position distante
vers la position d'injection.

17. Dispositif selon la revendication 16,
**caractérisé en ce que**
le dispositif d'alimentation en matériau d'emballage est agencé de telle sorte que l'élément de retenue (2) conserve sa position par rapport à l'élément de transfert (3) alors que le dispositif d'entraînement d'élément de transfert (8) déplace l'élément de retenue (2) et l'élément de transfert (3) dans la position d'injection.

18. Dispositif selon la revendication 16 ou 17,
**caractérisé en ce que**
le dispositif d'alimentation en matériau d'emballage comprend un élément de couplage mécanique
qui couple
un mouvement de l'élément de transfert (3) dans la position d'injection avec
un mouvement de l'élément de retenue (2) vers l'entrée de matériau d'emballage (In).

19. Dispositif selon l'une des revendications précédentes,
**caractérisé en ce que**
le dispositif d'alimentation en matériau d'emballage comprend un élément de déviation (17) qui est couplé mécaniquement
avec l'élément de retenue (2) et/ou
avec l'élément de transfert (3),
dans lequel l'élément de déviation (17) peut être déplacé ensemble avec l'élément de transfert (3) et/ou l'élément de retenue (2) entre
la ou une position distante, et
la position d'injection et
dans lequel l'élément de déviation (17) est agencé afin de dévier une bande (21) de matériau d'emballage, et
dans lequel la bande (21) comprend un segment qui est maintenu entre l'élément de retenue (2) et
l'élément de transfert (3).

20. Dispositif selon l'une des revendications précédentes,
**caractérisé en ce que**
l'élément de retenue (2) est stationnaire par rapport à l'entrée de matériau d'emballage (In) et
le dispositif d'entraînement d'élément de transfert (8) est agencé afin de déplacer l'élément de transfert (3) par rapport à l'élément de retenue (2) dans la position d'injection.

21. Dispositif selon l'une des revendications précédentes,
**caractérisé en ce que**
le dispositif d'alimentation comprend, en outre, un dispositif d'application (9) destiné à appliquer l'élément de transfert (3) contre l'élément de retenue (2).

22. Dispositif selon la revendication 21,
**caractérisé en ce que**
le dispositif d'application (9) est agencé afin d'appliquer un effort d'application en fonction de la position sur l'élément de transfert (3),
dans lequel
l'effort d'application appliqué sur l'élément de transfert (3) lorsqu'il est dans la position distante, est supérieur à
l'effort d'application appliqué sur l'élément de transfert (3) lorsqu'il est dans la position d'injection.

23. Dispositif selon l'une des revendications précédentes,
**caractérisé en ce que**
l'élément de transfert (3) est monté à une certaine distance par rapport à l'élément de retenue (2),
dans lequel la distance est supérieure à l'épaisseur d'une bande (21) de matériau d'emballage maintenu entre l'élément de transfert (3) et l'élément de retenue (2).

24. Dispositif d'emballage d'objet comprenant :
une chambre (Ch) agencée afin de contenir un objet (B) à emballer,
une entrée de matériau d'emballage (In) assurant le guidage dans la chambre (Ch), et
un dispositif d'alimentation en matériau d'emballage selon l'une des revendications précédentes,
dans lequel le dispositif d'alimentation en matériau d'emballage est agencé afin d'injecter une bande (21) de matériau d'emballage à travers l'entrée de matériau d'emballage (In) dans la chambre (Ch), et
dans lequel le dispositif d'emballage d'objet est agencé afin d'emballer au moins une surface de l'objet (B) dans la bande injectée (21)
pendant que l'objet (B) est contenu dans la chambre (Ch).

25. Dispositif de formation et d'emballage d'objet comprenant :
un moyen de formation d'objet comportant une chambre (Ch) dans laquelle une entrée de matériau d'emballage (In) assure le guidage et
un dispositif d'emballage d'objet selon la revendication 24,
dans lequel le moyen de formation d'objet est agencé afin de former un objet (B) dans la chambre (Ch) et
le dispositif d'emballage d'objet est agencé afin d'emballer au moins une surface de l'objet formé (B) dans la bande injectée (21)
pendant que l'objet formé (B) est contenu dans la chambre (Ch).

26. Véhicule adapté de manière à être déplacé au sol et comprenant :
un dispositif d'emballage d'objet selon la revendication 24 ou
un dispositif de formation et d'emballage d'objet selon la revendication 25.

27. Procédé de fourniture d'une bande (21) de matériau d'emballage à une chambre (Ch),
dans lequel un objet (B) qui doit être emballé dans la bande fournie (21) est contenu dans la chambre (Ch),
dans lequel une entrée de matériau d'emballage (In) assure le guidage dans la chambre (Ch),
dans lequel le procédé est exécuté en utilisant un dispositif d'alimentation de matériau d'emballage comprenant
un élément de retenue (2) avec un bord avant (FE.2) orienté vers l'entrée de matériau d'emballage (In),
un élément de transfert (3) avec un bord avant (FE.3) orienté vers l'entrée de matériau d'emballage (In), et
un dispositif d'entraînement d'élément de transfert (8),
dans lequel l'élément de transfert (3) peut être déplacé par rapport à l'entrée de matériau d'emballage (In) entre
au moins une position distante et
une position d'injection,
dans lequel le procédé comprend les étapes dans lesquelles
la bande (21) de matériau d'emballage est positionnée entre l'élément de retenue (2) et l'élément de transfert (3) et est maintenue entre les éléments (2, 3)
de telle sorte qu'un segment (Sg) de la bande (21) s'étend au delà d'au moins un bord avant (FE.2, FE.3) vers l'entrée de matériau d'emballage (In) au moins si l'élément de transfert (3) est dans la position d'injection,
le dispositif d'entraînement d'élément de transfert (8) déplace l'élément de transfert (3) par rapport à l'entrée de matériau d'emballage (In) à partir de la position distante ou d'une de celles-ci suivant une direction de transfert (CD) vers la position d'injection
en déplaçant l'élément de transfert (3), la bande maintenue (21) est déplacée vers l'entrée de matériau d'emballage (In), et
la bande déplacé et en saillie (21) est injectée à travers l'entrée de matériau d'emballage (In) dans la chambre (Ch),
**caractérisé en ce que**
le dispositif d'alimentation en matériau d'emballage comprend, en outre, au moins un élément de pression (4.1, 4.2, ...) qui
est monté au niveau du bord avant (FE.3) de l'élément de transfert (3) et
comprend un bord avant (FE.4.1, FE.4.2, ...) orienté vers l'entrée de matériau d'emballage (In) et
au moins une encoche (5.1, 5.2, ...)
est découpée sur le bord avant (FE.2) de l'élément de retenue (2) et
est positionnée de manière adjacente à l'élément de pression (4.1, 4.2, ...) ou à l'un de ces derniers,
dans lequel le procédé comprend l'étape supplémentaire dans laquelle
l'élément de pression (4.1, 4.2, ...) ou au moins l'un de ceux-ci s'assemble dans l'encoche (5.1, 5.2, ...) ou l'une de celles-ci qui est positionnée de manière adjacente à cet élément de pression (4.1, 4.2, ...) au moins lorsque l'élément de transfert (3) a atteint la position d'injection
de telle sorte que le segment en saillie (Sg) de la bande (21) est pressé par l'élément de pression (4.1, 4.2, ...) ou au moins l'un de ceux-ci à travers l'encoche adjacente (5.1, 5.2, ...),
entraînant ainsi le maintien du segment en saillie (Sg) de la bande (21) entre l'élément de retenue (2) et l'élément de pression (4.1, 4.2, ...) ou au moins l'un de ceux-ci.

28. Procédé selon la revendication 27,
**caractérisé en ce que**
l'entrée de matériau d'emballage (In) s'étend le long d'un axe d'entrée et
un rouleau (1)
est positionné de manière adjacente à l'entrée de matériau d'emballage (In) et
peut tourner autour d'un axe de rotation de rouleau (CA) qui est parallèle à l'axe d'entrée,
dans lequel l'étape dans laquelle le dispositif d'entraînement (8) déplace l'élément de transfert (3) dans la position d'injection provoque des événements dans lesquels
l'élément de transfert (3) est déplacé par rapport au rouleau (1) et
le bord avant (FE.4.1, FE.4.2, ...) de l'élément de pression (4.1, 4.2, ...) ou au moins de l'un de ceux-ci s'étend au delà de l'axe de rotation de rouleau (CA) dans l'entrée de matériau d'emballage (In) et vers la chambre (Ch)
au moins lorsque l'élément de transfert (3) a atteint la position d'injection.

29. Procédé selon la revendication 27 ou 28,
**caractérisé en ce que**
le dispositif d'alimentation comprend, en outre, un dispositif d'application(9),
dans lequel l'étape dans laquelle la bande (21) est maintenue entre l'élément de retenue (2) et l'élément de transfert (3) comprend l'étape dans laquelle
le dispositif d'application(9) applique l'élément de transfert (3) vers l'élément de retenue (2)
de telle sorte que la bande (21) est au moins temporairement intercalée entre l'élément de retenue (2) et l'élément de transfert (3) et
dans lequel l'étape dans laquelle le dispositif d'entraînement (8) déplace l'élément de transfert (3) comprend l'étape dans laquelle
l'effort d'application que le dispositif d'application(9) applique sur l'élément de transfert (3) diminue pendant que l'élément de transfert (3) est déplacé dans la direction de transfert (CD).

30. Procédé d'emballage d'un objet (B)
en utilisant un dispositif d'emballage d'objet comprenant une chambre (Ch) qui contient l'objet (B) à emballer,
dans lequel une entrée de matériau d'emballage (In) assure le guidage dans la chambre (Ch) et
dans lequel le procédé comprend les étapes dans lesquelles
une bande (21) de matériau d'emballage est délivrée à la chambre (Ch) en appliquant un procédé selon l'une des revendications 27 à 29, et
au moins une surface de l'objet (B) dans la chambre (Ch) est emballée par la bande (21) qui est injectée dans la chambre (Ch) pendant que l'objet (B) est dans la chambre (Ch).

31. Procédé de formation et d'emballage d'objet (B)
en utilisant un moyen de formation d'objet comportant une chambre (Ch) dans laquelle une entrée de matériau d'emballage (In) assure le guidage,
dans lequel le procédé comprend les étapes dans lesquelles
le moyen de formation d'objet forme l'objet (B) dans la chambre (Ch) prévue
et
au moins une surface de l'objet (B) dans la chambre (Ch) est emballée en utilisant un procédé selon la revendication 30.
